# EUROPEAN PATENT SPECIFICATION

(11) **EP 4 287 148 B1**
(45) Date of publication and mention of the grant of the patent: **06.08.2025**
(21) Application number: 22382519.1
(22) Date of filing: 30.05.2022
(51) Int. Cl.: G06V 40/13

(54) **CONTACTLESS FINGERPRINT BIOMETRIC SYSTEM**
BERÜHRUNGSLOSES BIOMETRISCHES FINGERABDRUCKSYSTEM
SYSTÈME BIOMÉTRIQUE SANS CONTACT À EMPREINTES DIGITALES

(43) Date of publication of application: 06.12.2023
(73) Proprietor: By Techdesign S.L., 28500 Arganda del Rey Madrid (ES)
(72) Inventor: Torquemada Jiménez, Antonio Daniel, 28500 Madrid (ES); Mojena Medina, Dahiana, 28500 Madrid (ES); Núñez Castellanos, José Luis, 28500 Madrid (ES); Medina Rodríguez, Santiago, 28500 Madrid (ES); Martin Cantero, Javier, 28500 Arganda del Rey (ES); Sánchez Pérez, Manuel, 28500 Arganda del Rey (ES)
(74) Representative: González López-Menchero, Álvaro Luis

(56) References cited:
- KR-A- 20190 097 706
- KR-A- 20210 123 385
- US-A1- 2011 064 282
- US-A1- 2020 050 821

## Description

### OBJECT OF THE INVENTION

The object of the present invention is, as the title establishes, both a device and a measurement procedure for the acquisition and processing of contactless fingerprints of one or more fingers.

The device is characterized by housing all the components of the system within a compact compartment of reduced dimensions, also presenting a highly innovative mechanical and ergonomic design, as it does not have any type of cover, visor, opening or support piece for the positioning of the hand or fingers. The fingers are captured "in the air" (without contact with the device), in a very fast, hygienic, simple and intuitive way, thanks to an advanced system of sensors and acoustic-luminous signaling elements that guide the user in the correct positioning of the hand (fingers) during the capture process.

The device comprises at least an external mechanical enclosure, an illumination module, an image capture module, an object detection module, an acoustic-luminous signaling module, a processing module and a control module. In addition to biometric fingerprint recognition (of one or more fingers), the device also allows the reading of other access credentials (multi-credential approach), such as RFID proximity cards and smartphones (mobile credential).

The device can be used for biometric (1:N) identification and/or (1:1) verification of users in applications related to the field of security systems and access control, such as offices, large corporate buildings, industry, hospitals, universities, luxury residential environments, etc. In particular, a device and a measurement procedure capable of capturing and processing the fingerprints of one or more fingers simultaneously, in a fast, simple, intuitive and hygienic (non-contact) way are proposed.

### STATE OF THE ART

Most current security and access control systems are based on authentication methods by possession (cards, keys, fobs...) and/or by knowledge (passwords, PINs...), and they do not offer enough security for many critical applications.

One solution to this problem are biometric authentication methods, based on physiological and/or behavioral traits or characteristics that are intrinsic to each person (e.g., fingerprint, face, iris, hand or finger vein pattern, voice, hand geometry, palm lines, ear shape, DNA, etc.). These biometric characteristics, unique to each individual, offer greater reliability for the univocal and secure recognition of persons, as such biometric credentials cannot be lost, forgotten, lent or reproduced (at least in a simple way).

Significant technological advances in the last two decades in fields such as electronics and algorithms have led to an unprecedented boom and development of biometric systems for the recognition of persons, especially in the security and access control sector.

Currently, it could be said that the most widespread biometric systems on the market are those based on fingerprints, attributing their extraordinary success and social acceptance to their proven reliability for the identification of persons, their ease of use and their great capacity for miniaturization (among others). Today there is a wide commercial offer of biometric fingerprint sensors and devices of different prices and technologies (optical, capacitive, ultrasonic, thermoelectric ...). These sensors are capable of capturing the fingerprint of one or several fingers simultaneously (depending on the capture area of the sensor and the technology used), and they can be grouped into two main categories: contact fingerprint sensors and contactless fingerprint sensors.

Most commercial fingerprint sensors are contact sensors, due to their simplicity of use, low cost, and ease of integration. These sensors, however, also present some important limitations such as: they require frequent cleaning of the contact surfaces, they present problems of repeatability between captures associated with uncontrolled deformations of the skin during contact, variability in the positioning of the finger within the capture window, detection of complicated fingerprints (dry, wet, worn, dirty, scarred fingers...), etc. In practice, all these limitations of contact fingerprint sensors often translate into a higher false rejection rate during accesses, which often increases the average response time of these sensors, thus undermining users' confidence and user experience.

Contactless biometrics has become very important and popular nowadays, especially in the current post-pandemic context of the coronavirus.

In terms of contactless fingerprint recognition systems and methods, it should be noted that these are still relatively recent developments. These systems fall into two main groups: those based on two-dimensional (2D) captures and those based on three-dimensional (3D) captures. The former acquire one or several 2D images of one or several fingerprints using a single image sensor (which is located in a fixed position). The latter, on the other hand, usually require a much more sophisticated and expensive hardware configuration, using, among other elements, several image sensors located in different locations of the device to allow a 3D reconstruction of the fingerprints, as well as sophisticated optical systems and powerful graphics processors.

In the state of the art is known the document KR20190097706, which discloses a contactless fingerprint recognition device and a contactless fingerprint recognition method, wherein the contactless fingerprint recognition device comprises a camera, at least one distance detection sensor, and a fingerprint recognition system.

It should be noted, however, that the current offering of contactless fingerprint biometric devices is far too expensive and sophisticated for most current commercial applications. According to our knowledge, there are only four commercial products that meet these characteristics: two of them are from Touchless Biometric Systems AG (a 3D single-finger reader with static capture and a 3D up to four-finger reader with dynamic capture), one from Morpho-IDEMIA (a 2D up to four-finger reader with dynamic capture -by means of a lateral displacement of the hand-), and finally, one from SecuGen (a 2D single-finger reader with static capture). Previously, ANDI-OTG patented and developed a sophisticated on-the-fly contactless biometric fingerprint system (a 2D up to five-finger reader with dynamic capture), but without much commercial success, due to the high cost and size of this device.

The scarcity of commercial developments and products of this type is mainly due to the incipient technological maturity of contactless fingerprint biometrics and its high cost, which prevents these systems from being widely used in most real applications.

Another important limitation of most of the current commercial devices is their limited ability to integrate with other systems (third-party integration), often including proprietary interfaces and communication protocols for information management and data exchange. Moreover, in many of these devices, other important shortcomings have also been identified, such as the ergonomic design of the devices, the lack of physical and logical security, the low quality of the materials used or the complexity of the installation process.

In this sense, this invention proposes a new device and measurement procedure for the acquisition and processing of non-contact fingerprints from one or multiple fingers simultaneously, in a fast, simple, intuitive, reliable and hygienic way. The system includes all the processing steps necessary to segment and trim the region of interest of the captured fingerprints, enhance and simplify the complex nature of the segmented fingerprints, extract biometric patterns from the fingerprints (templates), and perform the process of searching and matching of patterns in a database of users to carry out the tasks of verification (1:1) and/or identification (1:N) of persons in applications related to security and access control.

### DESCRIPTION OF THE INVENTION (SUMMARY):

The object of this invention is to describe a device and a measurement procedure for the acquisition and processing of contactless fingerprints of one or several fingers, up to 3 fingers, that maximize speed of response, ease of use, security and robustness of recognition and miniaturization of components.

The proposed device can be used for biometric user identification (1:N) and/or (1:1) verification tasks in applications related to security systems and access control. The device is characterized by housing all its components inside a compact compartment of reduced dimensions, also presenting a highly innovative mechanical and ergonomic design, as it does not have any type of cover, visor, opening or support piece for the positioning of the hand or fingers. The capture of the fingers is done "in the air" (without any contact with the device), in a very fast (less than 1 second), hygienic, simple and intuitive way, and all this thanks to an advanced system of sensors and acoustic-luminous signaling elements that guide the user in the correct positioning of the hand (fingers) during the capture process.

The proposed device comprises at least the following elements:
- an external mechanical enclosure that houses and protects all system components, an illumination module comprising in one possible form of realization, high-power LED sources of one or more wavelengths in the 400-700 nm range and focusing optical lenses,
- an image capture module including a 1~3 MP CMOS image sensor, an optical imaging lens with a fixed focal length of 8∼16 mm, a diaphragm with an aperture range of F5.6~F11,
- an object detection module comprising an infrared optical barrier sensor and ToF proximity sensor(s),
- an acoustic-luminous signaling module (buzzer, light guide),
- a computing and processing module including the software and algorithms necessary for digital image processing, biometric user recognition, access control logic, liveliness detection, implementation of different enrollment and user identification strategies, and
- a control module equipped with different communication interfaces - Bluetooth^{®}, NFC, RFID, TCP/IP, RS-485...- to allow the connectivity of the equipment with other devices.

In addition to multi-fingerprint biometric identification, the proposed device also envisages the use of other digital access credentials through NFC and Bluetooth^{®} technologies of smartphones (mobile credential), and/or the use of RFID proximity cards.

The proposed biometric device is specially designed for 1:N identification and/or 1:1 verification of users in access control systems where it is required to validate, in a totally secure and reliable way, the access of a large volume of users (e.g., from 1,000 to 50,000) in very short periods of time, such as, for example, office environments, hospitals, universities, industrial facilities, large corporate buildings, residential complexes, sports spaces, shopping centers, etc. Therefore, one of the critical design parameters is the response time of the device (less than 1 second). The device is very ease to use (ergonomics), achieving a double objective: on the one hand, to reduce response times during accesses as much as possible and, on the other hand, to increase the quality of the fingerprint captures.

In addition, the availability of up to three different fingerprints for the identification of a user provides an excellent opportunity to develop different multi-fingerprint identification strategies, depending on the security level required. Thus, for example, in ultra-high security scenarios, all three fingerprints of a user could be used to reliably secure his or her identification, making any attempt at identity theft almost impossible. On the other hand, in less restrictive scenarios, one of the user's three fingerprints could be used to identify the user and, subsequently, a different fingerprint could be used to verify the user's identity (dual credential). Furthermore, another advantage of having multiple fingerprints for user identification is, undoubtedly, the reduction of the false rejection rate due to poor quality of the fingerprints captured. This will, a priori, lead to a better user experience and thus to a higher acceptance of the product.

### BRIEF DESCRIPTION OF THE DRAWINGS

To complement the description being made, and in order to aid a better understanding of the characteristics of the invention raised in this document, there is attached as an integral part of said description a set of drawings wherein, by way of illustration and not limitation, the following has been depicted:
**FIG. 1****.-** Preferred embodiment of the invention illustrating a contactless biometric fingerprint device together with its main parts and components.
**FIG. 2****.-** Preferred embodiment of the invention illustrating different variants of the proposed contactless biometric fingerprint device. FIG-2A shows a single-fingerprint capture device (of a single finger), while FIG-2B shows a multi-fingerprint capture device (of one or more fingers simultaneously).
**FIG. 3****.-** Preferred embodiment of the invention illustrating the main parts and components of the illumination module and the object detection module of the proposed contactless biometric fingerprint device.
**FIG. 4****.-** Preferred embodiment of the invention illustrating the detail of the illumination pattern obtained at different distances from the illumination module. "Section A" illustrates the illumination pattern obtained at the optimal capture distance of the device (homogeneous pattern), while "Section B" illustrates the same pattern obtained at a distance less than the optimal capture distance (non-homogeneous pattern).

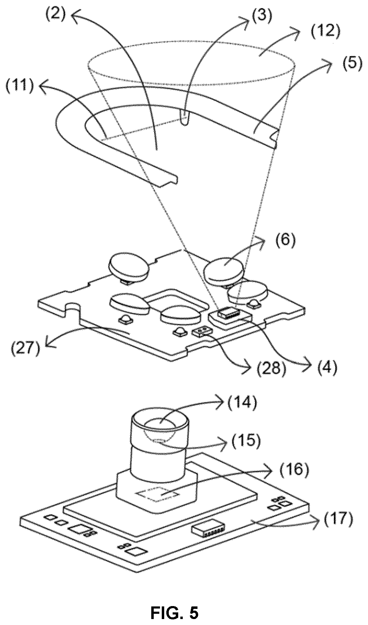

**FIG. 5****.-** Preferred embodiment of the invention illustrating the main parts and components of the illumination module, the image acquisition module and the processing module of the proposed contactless biometric fingerprint device.

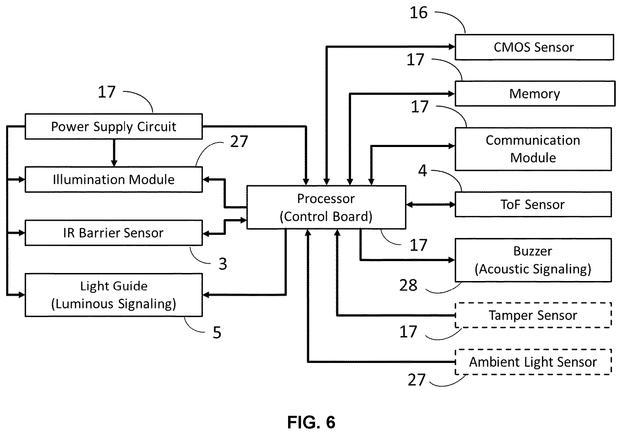

**FIG. 6****.-** Block diagram illustrating the main modules and hardware components of the proposed device.
**FIG. 7****.-** Preferred embodiment of the invention illustrating the mode of operation of the proposed contactless fingerprint biometric device. FIG-7A shows the object's detection mode (finger or fingers entering within the active capture zone of the device). Fig-7B illustrates the optimal positioning zone of the fingers to ensure a clear capture of fingerprints (determined by an optical barrier sensor). The FIG-7C shows the final fingerprint capture process with the image acquisition module of the device.

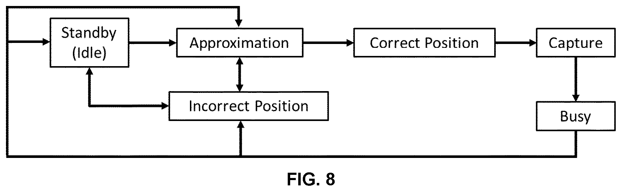

**FIG. 8****.-** Functional block diagram of the proposed device and state transition during the complete capture process.

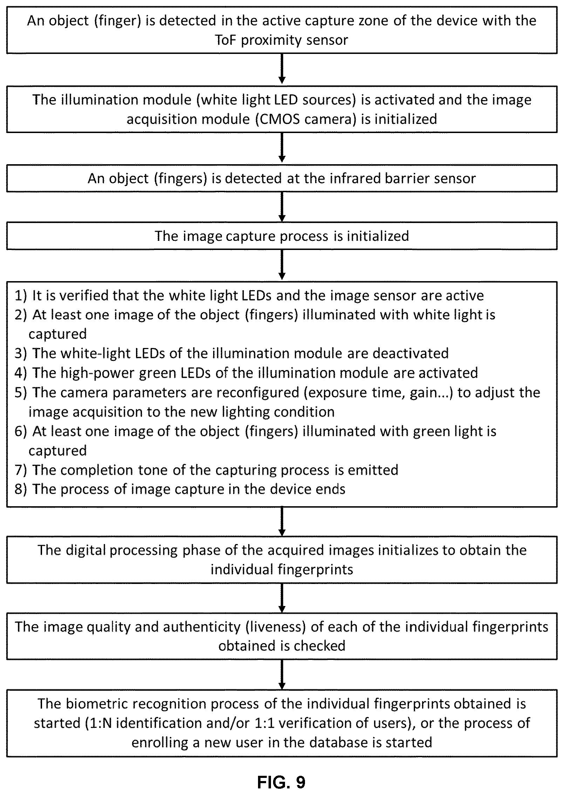

**FIG. 9****.-** Functional block diagram showing the sequence of steps required to perform the image capture process with the proposed device. Other post-capture stages are also indicated: processing of the fingerprint images, determination of their quality and authenticity (liveliness), and biometric recognition of the fingerprints.

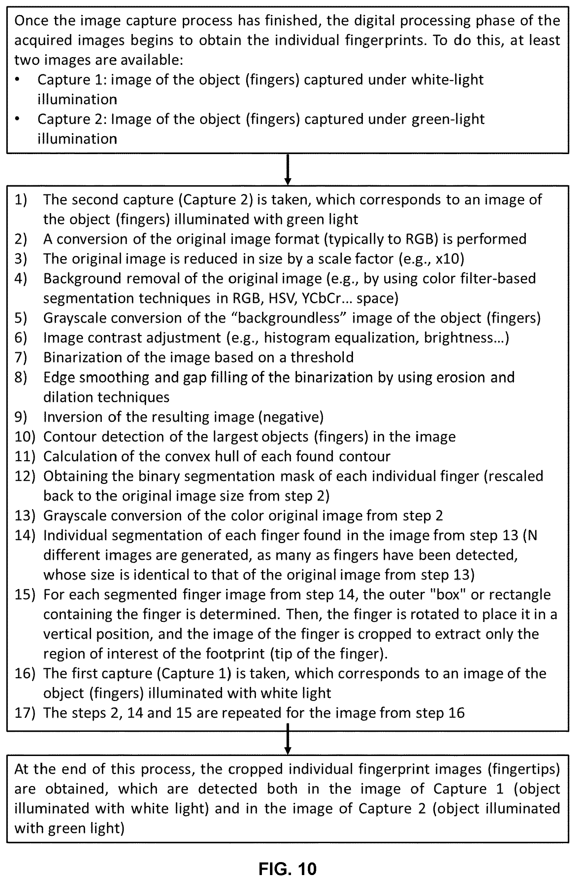

**FIG. 10****.-** Functional block diagram showing the sequence of steps necessary to carry out the individual segmentation process of the fingerprints present in the finger images captured with the proposed device.

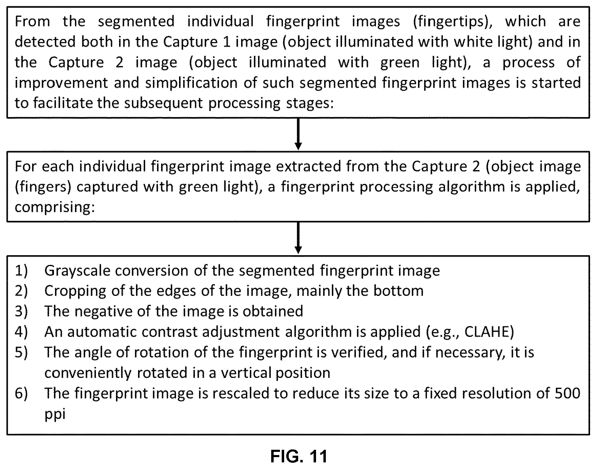

**FIG. 11****.-** Functional block diagram showing the sequence of steps necessary to carry out the enhancement and simplification process of the segmented fingerprint images with the proposed device.

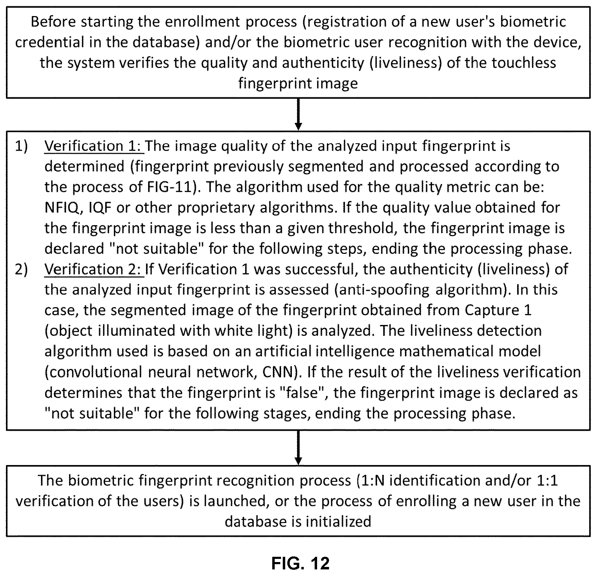

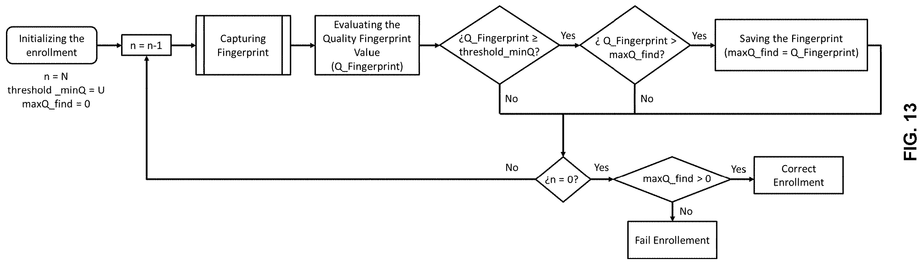

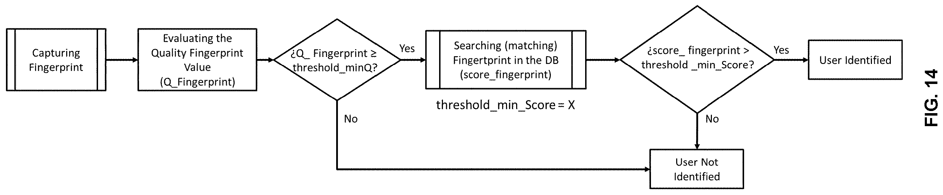

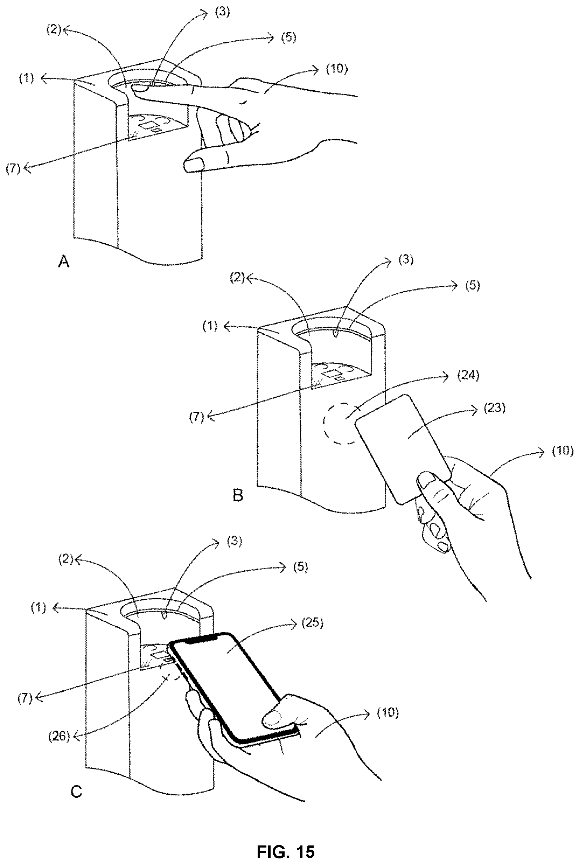

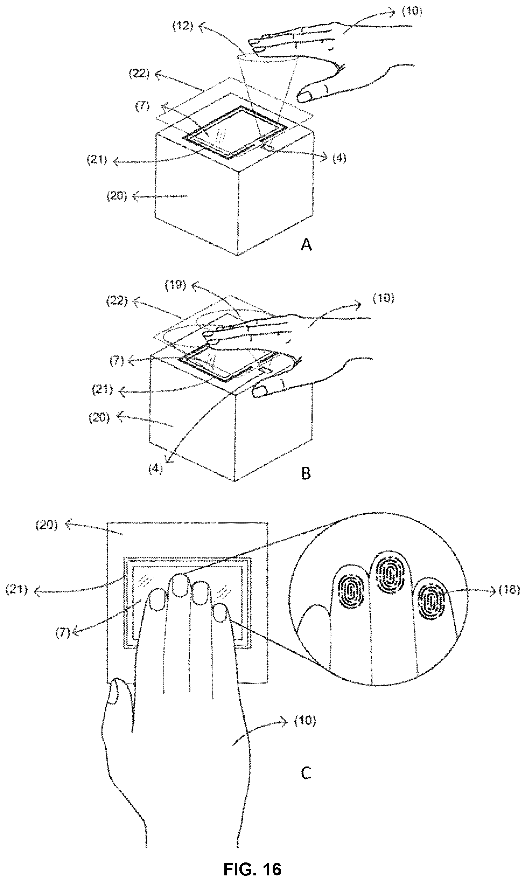

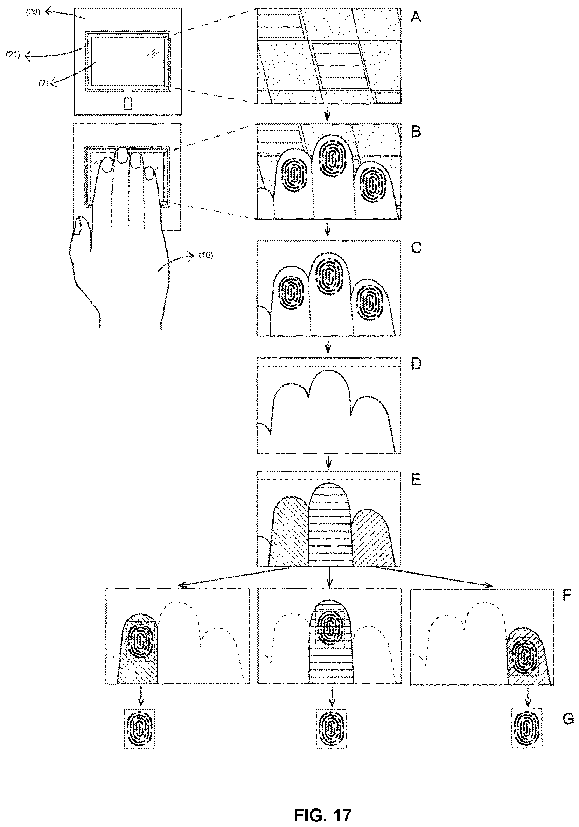

**FIG. 12****.-** Functional block diagram indicating the sequence of steps necessary to carry out the process of checking the quality and authenticity (liveliness) of the segmented fingerprint images with the proposed device.
**FIG-13.-** Functional block diagram detailing the sequence of steps necessary to perform the biometric user enrollment process with the proposed device.
**FIG-14.-** Functional block diagram detailing the sequence of steps required to perform the biometric user identification process with the proposed device.
**FIG-15.-** Different access credentials allowed with the proposed device (multi-credential approach): contactless fingerprint biometrics (single or multi-finger), RFID proximity cards and smartphones (mobile credential via NFC or Bluetooth^{®} technologies).
**FIG-16.-** Another preferred embodiment of the invention illustrating a contactless fingerprint biometric device for up to three fingers.
**FIG-17.-** Digital processing stage for individual fingerprint segmentation with the device proposed in FIG-16.

### DETAILED DESCRIPTION OF THE INVENTION

The biometric identification and/or verification of persons by means of fingerprint recognition requires an image acquisition stage of at least one fingerprint of the subject to be identified, another image processing stage that allows biometric patterns (e.g., minutiae templates) to be extracted from the captured fingerprint images, and finally, a biometric pattern searching and matching stage of biometric patterns that allows to determining/verifying the identity of a user previously registered in a database.

In particular, a device and a measurement procedure for contactless fingerprint acquisition are proposed, which may be used for 1:N identification and/or 1:1 verification of users in applications related to security and access control. Specifically, this document describes a device and a measurement procedure capable of simultaneously capturing and processing the fingerprints of one or more fingers of a user in a fast, simple, intuitive and hygienic (contactless) manner.

The proposed invention significantly improves many of the current limitations of contact biometric fingerprint devices, highlighting, among others, the following aspects: response time (<500 ms), capture ergonomics (greater ease of use: dynamic capture vs. static capture), hygiene (contactless captures, no latent fingerprints), image quality (larger captured fingerprint area and no skin deformations: greater reproducibility between captures), and overall biometric performance (more secure, robust, fast and efficient biometric identification).

On the other hand, in relation to other existing biometric devices and systems, all of them based on contactless fingerprint detection technology, it should be noted that the proposed invention presents multiple differential and unique aspects in the conceptualization of its design and functionality, which are combined synergistically to achieve the desired result. In particular, some of the differentiating features of the proposed invention with respect to the rest of the published devices and systems are: miniaturization of components (minimum volume of the device, ease of assembly and installation on any surface), improved capture ergonomics (fast dynamic capture of one or several fingers simultaneously, without a visor or any other mechanical element in the device's enclosure that delimits a restricted or closed physical space for capturing), acoustic-luminous signaling (light band and buzzer) to guide the user in the correct positioning of the finger(s) during capture (increased ease of use, speed of operation, improved user experience and increased quality and reproducibility of captured fingerprint images), advanced reader/controller functionality within a single miniaturized device (advanced software algorithms for the capture and optimal digital processing of fingerprint images: finger segmentation, fingerprint region of interest (ROI) segmentation, enhancement and simplification of segmented fingerprint images, feature extraction (biometric patterns) from segmented and enhanced fingerprint images, search and comparison of biometric fingerprint patterns for biometric user identification and/or verification tasks, liveliness detection algorithms - real/fake finger classifiers - access control logic, user database management, etc.).

As described in more detail below, the proposed contactless fingerprint capture device comprises:
- a capture area or zone,
- one or more optical barrier or beam break sensors,
- one or more proximity sensors,
- one or more light sources,
- a camera for the acquisition of fingerprint images,
- acoustic-luminous signaling elements,
- a module for data acquisition and processing,
- various software programs and advanced algorithms for digital image processing, biometric user recognition and implementation of device's control logic.

**FIG-1** shows a preferred embodiment of the invention illustrating a contactless biometric fingerprint device together with its main parts and components. Such a single or multi-finger contactless biometric fingerprint capture device **(1)** comprises: an external mechanical housing or enclosure **(9)** made of resistant material, which encloses and protects all elements of the device; a transparent glass window **(7)** of 1-2 mm thickness; several inner support pieces (e.g. **(2)** and other non-visible pieces located inside the external mechanical enclosure **(9)** of the device) made of insulating material, which fix and isolate the optical and electronic components of the system **(3, 4, 6, 8);** an "in the air" capture area **(2)** equipped with: at least one optical barrier sensor **(3),** coincident with the optimal capture area or zone of the system (a plane), which allows detecting the passage of an object through the said capture area; at least one proximity sensor **(4)** (e.g., a ToF sensor), which allows determining the distance, speed and/or inclination of an object approaching the capture area **(2)** of the system; a light guide or light signaling band **(5),** coincident with the optimal capture area (or plane) **(3),** which indicates the user where to position the finger(s) in the air **(2)** to perform an optimal fingerprint capture and provides useful visual feedback of the system status (idle, finger detected in the capture area, access granted, access denied, equipment restarting...), where each of these states is coded with a different color (blue, red, green, orange, white...); an acoustic signaling module (e.g. a buzzer), which indicates the system status to the user (image capture performed, access granted, access denied, equipment restarting...); a dynamic illumination module **(6),** equipped with LED light sources of different wavelengths (in the range of 400-700 nm) and appropriate optical lenses, which projects a uniform and intense light pattern onto the object of interest (fingers) located within the optimal capture area of the device **(3);** an image acquisition module **(8),** equipped with a CMOS camera and appropriate optics, which allows the capture of high-resolution images of one or more fingers passing through the optimal capture area **(3)** (optical barrier) of the device, even when said object (finger(s)) is in motion; a processing module located inside the housing **(9)** of the device, equipped with a processor and the necessary software programs to perform the digital processing of the finger images captured with the image acquisition module **(8)** of the device (individual segmentation of the fingers present in the image, segmentation of the fingerprint ROI, adaptation of the fingerprint images, liveliness detection, determination of the fingerprint quality...), as well as the subsequent process of biometric user recognition (feature extraction from fingerprint images, biometric pattern matching, user database management and storage...), and the implementation of the control logic of an access control system (management of system user permissions, opening/closing signaling of physical elements of the system...); and finally, a control module located inside the enclosure **(9)** of the device, equipped with the necessary communication interfaces (e.g. Bluetooth^{®}, NFC, RFID, TCP/IP, RS-485...) to allow its connectivity with other devices (secure door units, controllers, locks, sensors, smartphones...).

**FIG-2** shows a preferred embodiment of the invention illustrating different variants of the proposed biometric device for the capture and processing of fingerprints without contact. In particular, these variants refer to the size and mode of use of the device, being able to capture from a single finger (fingerprint) **(FIG-2A),** up to one or more fingers (fingerprints) simultaneously **(FIG-2B).**

Referring to **FIG-3,** the main parts and components of the illumination module of the proposed biometric device are detailed. This module implements a dynamic light illumination system (temporal sequence of lights of different wavelengths) that allows illuminating the object of interest (fingers) when it passes through the optimal capture area **(3)** of the device. Said illumination system comprises several high-power LED sources **(13)** of different wavelengths (in the range of 400-700 nm), equipped with plano-convex optical lenses **(6)** to focus the light beams on the optimal capture plane **(3)** of the device. The appropriate combination and mechanical arrangement of these components allows the generation of a homogeneous and intense light pattern on the optimal capture area **(3)** of the device (optimal capture plane coinciding with the optical barrier sensor), being this illumination essential for obtaining sharp and contrasted images of the object of interest (fingers) during the capture process. The characteristics of the resulting illumination pattern are shown in more detail in **FIG-4.** This figure shows a cross-section of the upper part of the proposed device, where the mechanical arrangement of the different components of the illumination module can be clearly seen (LED light sources **(13)** and their corresponding focusing lenses **(6)).** The appearance of the resulting illumination pattern **(19)** at different heights or distances from the illumination module -LED light sources **(13)-** is also illustrated. 'Section B' illustrates the resulting illumination pattern at a distance close to the illumination module **(13),** located below the optimal capture plane **(3)** of the device. In this case, there is a clear heterogeneity in the resulting illumination pattern, distinguishing the individual light beams from the LED sources **(13)** of the illumination module. 'Section A' illustrates this same pattern at a distance coinciding with that of the optimal capture plane of the device (where the optical barrier sensor **(3)** and the light signaling band **(5)** of the device are also located). At this greater distance from the illumination module **(13),** the resulting illumination pattern **(19)** has a much more homogeneous and intense appearance in the entire capture area of the device, this characteristic being essential to achieve an adequate illumination of the fingers during the capture process, which avoids the inclusion of unwanted artefacts in the image (shadow areas, brightness, etc.).

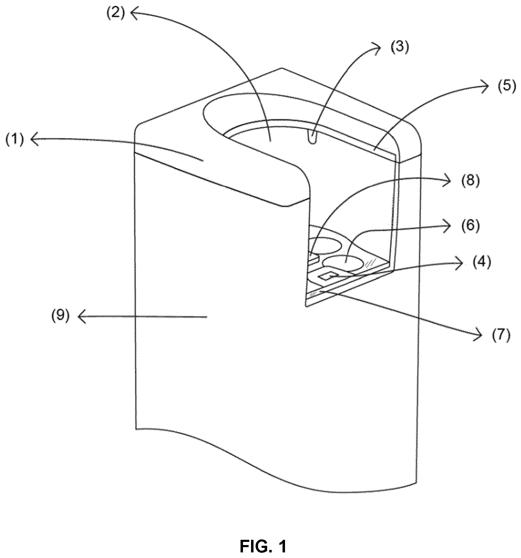

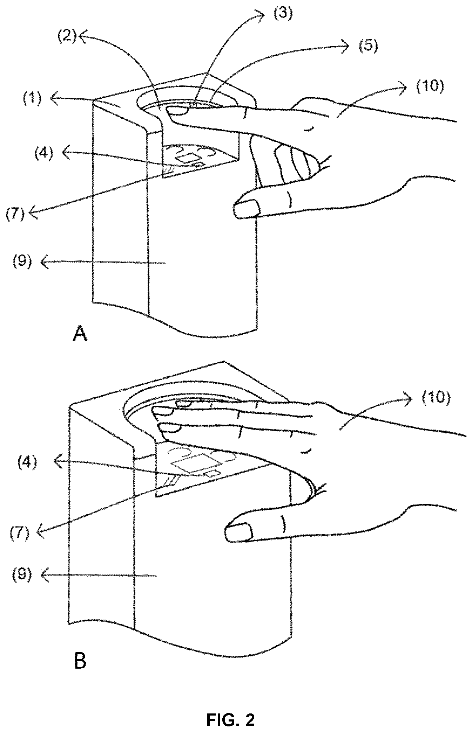

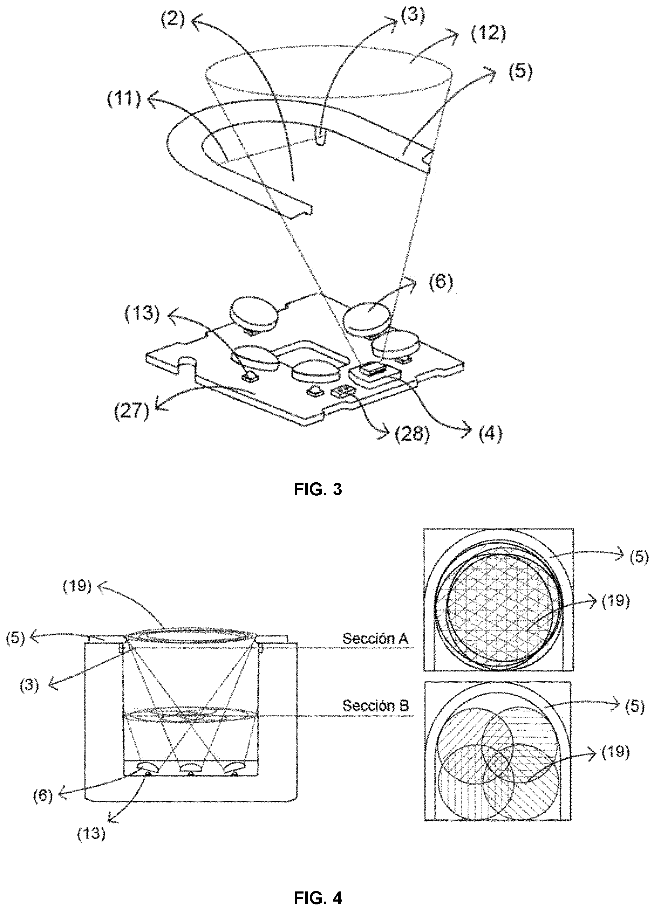

On the other hand, as shown in **FIGs. 1-4****,** the illumination module of the device is characterized by the fact that it does not require any type of "visor or top cover" on the outer enclosure of the device **(1)** that prevents users from being dazzled during capture and/or the entry of external light into the device. The illumination pattern is incident directly on the inner face of the fingers (prints) (see Figure **FIG-2),** but only for a short period of time (between 50-150 ms). This intense 'flash' type illumination is only activated when the object (fingers) passes through the optimal capture area **(3)** of the device (delimited by the optical barrier sensor). The short duration of the illumination, together with a careful mechanical arrangement of all the optical components of the illumination module (see **FIGs. 3** and **4****),** avoids any risk of dazzling the user, since the fraction of light that escapes outside the device is small, and it does so in a different trajectory from the user. This special feature eliminates the need to use a protective element on the device (e.g. a visor or top cover) to prevent light from escaping to the outside, resulting in a simpler, more ergonomic and easier-to-install mechanical design.

As mentioned above, the illumination module of the device (see **FIG-3)** is characterized by the use of LED light sources **(13)** of different wavelengths (white light, green light...), which are strategically distributed in different locations within the same plane **(27)** (electronic circuit board). These LED light sources **(13)** are positioned around the CMOS camera **(14-16)** of the device's imaging module (see **FIG-5),** thus forming an illumination ring around it. Each of these LED sources **(13)** also incorporates a plano-convex optical lens **(6)** to focus the LED light beam in the appropriate direction, with the inclination of each lens being different depending on the position of each LED. The conjunction of all these elements of the illumination module **(27),** allows optimizing the direct illumination pattern (see **FIG-4,** Section A) incident on the object of interest (fingers) located in the optimal capture plane **(3)** of the device. Said LED light sources **(13)** act dynamically (sequentially) to achieve different illuminations of the object of interest (fingers). The device's image acquisition module **(FIG-5,** CMOS image sensor **(16))** acts synchronously with the dynamic illumination module **(27)** to capture one or more images of the object of interest (fingers) under different lighting conditions. These images are then used by the processing module **(17)** of the device to perform the biometric fingerprint recognition (matching), as well as the liveliness detection process (anti-spoofing algorithm).

**FIG-5** illustrates the hardware detection module of the device, responsible for determining the distance, speed and/or inclination of the object of interest (fingers) entering the active capture zone of the device **(2),** as well as detecting the passage of said object (fingers) through the optimal capture plane **(11)** of the system -coincident with the optical barrier sensor **(3)-.** This hardware detection module is characterized by comprising at least one optical barrier sensor (e.g. infrared) **(3),** which makes it possible to detect very quickly and reliably the passage of an object (fingers) through it **(11).** This optical barrier sensor is located at a fixed distance of between 60-120 mm above the vertical of the CMOS sensor **(16)** of the device's image acquisition module. This distance is coincident with that of the optimal capture plane of the device **(11),** and determines a two-dimensional plane within the active capture zone of the device **(2)** where the acquisition of the object of interest (fingers) is optimal, i.e. where the images captured by the CMOS camera **(16)** are in focus, presenting an adequate resolution and sharpness to address with guarantees the subsequent stages of processing and biometric recognition of the fingerprints. This fact is achieved thanks to two fundamental aspects:
1) an illumination module **(27),** which generates a uniform and intense light pattern on the object of interest (fingers) located in the optimal capture plane of the device **(11),** allowing an adequate contrast of the object before starting the capture process with the imaging module **(16);**
2) an imaging module **(16),** which acts synchronously together with the hardware detection module of the device **(3, 4)** to enable sharp capture of images of an object of interest (fingers) located in the optimal capture plane of the device **(11),** even when that object is in motion.

The hardware detection module also includes at least one proximity sensor (e.g. a ToF sensor) **(4, 12),** which allows to determine the distance, speed and/or inclination of an object (fingers) approaching the active capture zone **(2)** of the device. This proximity sensor **(4),** together with the optical barrier sensor **(3),** form a simple and efficient hardware detection system that allows to monitor in real time and with high accuracy the positioning (distance, inclination and / or speed) of an object (fingers) moving freely within the active capture zone of the device **(2).** This hardware detection system therefore establishes optimal capture conditions for sharp image acquisition with the proposed device (e.g., of the fingertips), thus preventing the capture of poor quality (unfocused) images when the object (fingers) is outside these optimal conditions (e.g., out of focus, displaced, tilted, moving too fast, etc.).

As shown in **FIG-5,** the hardware detection module of the device further incorporates a light guide or light signaling band **(5)** located just above the optical barrier sensor **(3),** and which serves to indicate to the user where to place the finger(s) in the air - within the active capture zone of the device **(2)-** for optimal fingerprint capture (optimal capture plane, **11).** This light guide **(5)** comprises in turn: 1) an electronic board, which contains a set of RGB LEDs whose brightness and color can be configured via software from the device's processing module (**17**); 2) a plastic diffuser piece, made of a translucent material **(5),** which insulates and protects the LEDs from the outside and allows light to pass through it. This light guide also provides visual information to the user about the status of the system (valid access, access denied, equipment rebooting...), where each state is coded with a different color. Furthermore, the device's hardware detection module may also include an acoustic signaling element (e.g., a buzzer) **(28),** providing the user with audible information about the status of the system (valid access, access denied, equipment rebooting...), where each status is coded with a tone of a different frequency.

**FIG-5** illustrates the device's image acquisition module **(16),** characterized by comprising:
1) a color CMOS image sensor **(16)** of size 1/3-1.25", with a minimum resolution of between 1~3 MP, global shutter detection technology and a frame acquisition rate of between 30~64 fps;
2) an optical lens **(14)** with a fixed focal length in the range of 8∼16 mm, located just in front of the CMOS sensor **(16);**
3) said optical lens **(14)** also incorporates a fixed-size diaphragm aperture **(15)** whose number can range between F5.6~F11, which reduces the amount of light passing through the lens.

The CMOS image sensor **(16)** is located at a fixed distance of 60∼120 mm from the optical barrier sensor **(3)** of the device, depending on the capture area of the device (see **FIG-2).**

The conjunction of these characteristics of the image acquisition module (CMOS sensor + optical lens + diaphragm), together with the particularities of the illumination module (generation of a uniform and intense flash' type light pattern), makes it possible to obtain an image capture system with an improved depth of field (range of distances where the object to be captured is always in focus). This depth of field can be 5~25 mm, depending on the size of the device (see **FIG-2).**

On the other hand, all the elements shown in **FIG-5** for the image acquisition module **(14, 16, 17)** and the illumination module **(4, 6, 27, 28)** of the device are protected and isolated from the outside by means of an ultra-resistant transparent glass window **(7)** of 1~2 mm thickness (see **FIG-1),** which has some special features for this application. Thus, the external face of this glass window has an oleophobic treatment that helps to minimize the effect of latent fingerprints (deposition of grease or dirt in case of physical contact between fingers and the capture window). Said glass also has an anti-reflective treatment on its inner side, which prevents direct and indirect reflections of the illumination light on the surface of the glass, and which could generate unwanted artefacts in the captured images, thus hindering their further processing.

As shown in **FIG-5,** the proposed device also has a processing module **(17),** characterized by comprising an electronic control circuit including at least a miniaturized high-performance processor, a memory module for secure data storage, several power supply modules of different voltages and currents, configurable digital input and output modules, communication interface modules (e.g., NFC/RFID, Bluetooth^{®}, TCP/IP...). This control board makes it possible to send and/or receive data to/from all elements of the device: optical barrier sensor **(3),** ToF proximity sensor **(4),** LED light sources **(6),** CMOS sensor **(16),** light guide **(5),** buzzer **(28),** Bluetooth^{®} module, RFID antenna, NFC, etc. In short, this control board allows coordinating the operation of all the elements of the system to achieve the desired result. This board **(17)** also includes a set of software programs and advanced processing algorithms that enable the processing and biometric recognition of the fingerprints captured with the device, as well as the logical operations associated with an access control system.

As a summary, **FIG-6** shows a simplified block diagram with the main modules and hardware components of the proposed device. In addition to the hardware components mentioned above, the device may also include a tamper sensor to detect tampering and/or unauthorized opening of the equipment, as well as an ambient light sensor to automatically regulate the light intensity of the luminous signaling guide **(5)** from the processor **(17).**

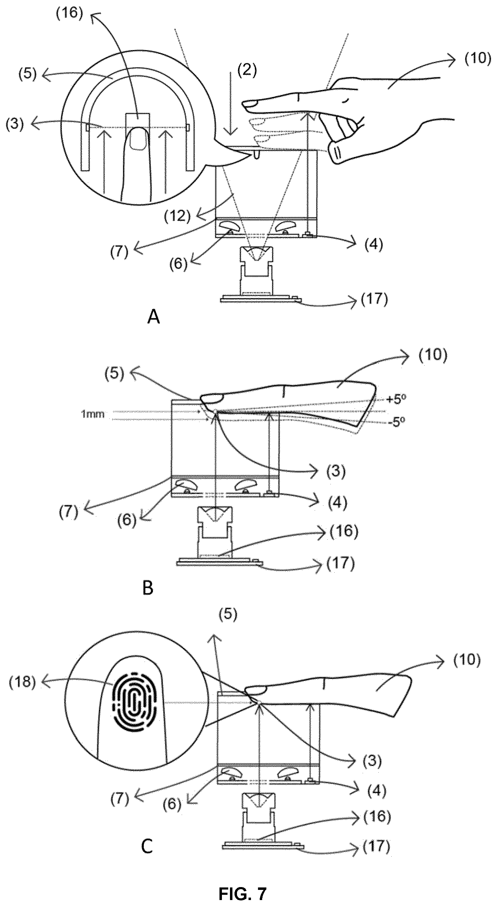

Having described the main modules and hardware components of the proposed device, we will now describe its operation, which includes a process for capturing and processing finger images (fingerprints) to enable biometric recognition of users in identification/verification tasks. **FIG-7** illustrates said method of capturing and processing fingerprints without contact ('in the air') for one or more fingers, which comprises the following steps:
1) The detection (via hardware) of an object (fingers) **(10)** passing through an active capture area **(2).** The device allows the capture of fingerprints from one or more fingers of a user (see **FIG-2),** which must be correctly positioned within a permitted space (active capture zone of the device) to start the automatic reading process. For this purpose, the device incorporates a ToF proximity sensor **(4),** an infrared optical barrier sensor **(3),** and acoustic-luminous indicators **(28** and **5**) to facilitate user operation (see **FIG-7A).** The combination of information from the optical barrier sensor **(3)** and the ToF proximity sensor **(4)** allows for fast and accurate determination of the correct positioning of the object (fingers) (e.g. distance, approach speed and inclination) within the active capture zone of the device **(2).** This hardware detection of the object (fingers) is necessary to be able to activate the rest of the stages of the capture process. In this case, the capture or reading process starts when one or several fingers of the user approach the device (detection distance range between 45∼180 mm), entering these in the active capture zone of the device **(2),** and ends when the image of said finger(s) is captured. During this process, the device goes through different phases that are notified to the user by means of acoustic-luminous indications.
2) Once the object (fingers) **(10)** is detected within the active capture zone of the device **(2),** the preparation phase of the image acquisition module **(16)** begins (configuration and activation of the camera). Likewise, when the object (fingers) crosses the optimal capture zone (2D plane delimited by the optical barrier sensor **(3)),** the system's illumination module **(27)** is activated for a short period of time (between 50-150 ms). Said illumination module emits a uniform and intense light pattern on the object of interest (fingers), whose wavelength (color) can vary dynamically during the duration of the illumination burst. This dynamic change in illumination allows the capture of images under different lighting conditions, which will be used in subsequent processing stages.
3) Synchronously with the illumination module **(27),** the device starts the image acquisition process with the camera module **(16),** just at the instant when the object of interest (fingers) crosses the optimal capture plane delimited by the infrared barrier sensor **(3)** (see **FIG-7B).** This capture process allows the acquisition of at least two or more images of the object of interest (fingers) under different lighting conditions (white light, green light...), even when it is moving **(2)** or slightly tilted (±5° with respect to the optimal capture plane set by the optical barrier sensor). On the other hand, in order to facilitate the user the correct positioning of the fingers within the optimal capture zone **(3),** the device incorporates a luminous signaling band **(5)** located just above the optical barrier sensor **(3).**
4) The detection (via software) of the position of the object of interest (fingers) within the acquired images (see **FIG7-C****).** At this stage, a digital processing of the captured images is performed to determine the position of the finger(s) present in the image **(18),** and thus proceed to their individual segmentation. Once the fingers have been individually segmented, the area of interest of the fingerprints (fingertips) is identified and subsequently cropped, and then the cropped fingerprint images are digitally processed to improve their quality and simplify their complex nature as much as possible (with the aim of facilitating the subsequent biometric recognition stage). This image processing stage includes at least the following steps: conversion of the original image format, image scaling (reduction of its original size), color space conversion (e.g., RGB, HSV, Lab, YCbCr...), separation of the color channels, background subtraction (fingers vs. background) using thresholding techniques based on color filters, grayscale conversion, contrast adjustment (e.g., histogram equalization, brightness adjustment...), binarization, individual finger segmentation by means of morphological operations (e.g., erosion, dilation...) and contour detection (e.g., active contours), trimming of the region of interest (ROI) of the fingerprints, quality enhancement and simplification of the ridge and valley pattern of the trimmed fingerprints (e.g., denoising, contrast adjustment, image negative...), image rotation, and a final image scaling (e.g., with a minimum resolution of 500 ppi).
5) The proposed device also implements a liveliness detection algorithm, which makes it possible to determine whether or not an input fingerprint image corresponds to that of a real finger (anti-spoofing detection algorithm). This algorithm uses artificial intelligence techniques (Deep Learning) based on a previously trained convolutional neural network (CNN) model.
6) Likewise, the proposed device also makes use of an image quality detection algorithm, which allows determining whether or not an input fingerprint image has sufficient quality to start the enrollment and/or biometric recognition process (identification /verification) with the device. If this condition is not fulfilled (e.g., based on a previously set threshold quality value), the device will not continue with the enrolment process and/or with the fingerprint recognition stage. This fingerprint quality algorithm, together with the anti-spoofing algorithm, acts as an additional security filter for the enrolment and/or biometric recognition process of the device, thus minimizing the probability of identification errors due to unauthorized accesses (false acceptance).
7) Finally, the device has an advanced biometric feature extraction algorithm (e.g., minutiae), which allows generating the biometric pattern (or template) of an input fingerprint. This biometric pattern is compared with other biometric patterns previously stored in the database, carrying out the biometric user recognition process (1:N identification or 1:1 verification).

At the functional level, the device always starts from an idle (low-power) situation in which only some essential components and sensors (e.g., ToF proximity sensor **(4),** optical barrier sensor **(3)** and light signaling band **(5))** are active. Upon detecting the presence of an object (fingers) within the active capture zone of the device **(2),** the device initiates an image capture procedure in which it goes through different states (see **FIG-8).**

In summary, the device indicates with a light **(5)** and an acoustic **(28)** signal the active capture zone **(2)** in which the user must position his/her finger(s) to perform the capture. Once the presence of one or more fingers in the appropriate position has been detected (thanks to a set of sensors), the device proceeds to capture one or more images of the object of interest (fingers) under different lighting conditions (dynamic light of different color), indicating the result of said capture process (valid /invalid) by means of an acoustic signal of different tone (frequency). Subsequently, these acquired images are digitally processed by the processing module of the device **(17)** to carry out the biometric recognition. In the following, the different states of the device during the image capture process are briefly described (see **FIG-8):**
- *Idle:* Default state of the capture device. It is waiting for some external interaction, continuously monitoring the different sensors of the detection module **(3** and **4**). Ideally, the CMOS image sensor will be inactive, thus minimizing thermal problems due to heat dissipation and also the stand-by power consumption. The light signaling band **(5)** is blue.
- *Approximation:* Once the device has detected the presence of a finger(s) **(10)** with the ToF sensor **(4, 12),** it activates the illumination module **(27),** turning on only the white light LEDs, and also launches the process of configuration and initialization of the camera module. The light signaling band **(5)** is orange.
- *Incorrect position:* Using the ToF **(4)** proximity sensor, the positioning of the object (fingers) is detected (e.g., distance, approach speed and inclination). Such erroneous positioning occurs when: 1) the object (fingers) is at a very close distance from the window of the device (7), less than that of the optical barrier sensor **(3);** (2) the approach speed of the object (fingers) is higher than a preset value; 3) the inclination of the object (fingers) is greater than ±5° with respect to the optimal capture plane set by the optical barrier sensor. From this state it is not possible to switch to the correct position state without first activating the approach mode. In this case, the device emits an acoustic error signal and the light signaling band **(5)** is red.
- *Correct position:* It is detected by the device's infrared barrier sensor **(3)** and the ToF proximity sensor **(4).** When the object (fingers) crosses the infrared barrier, said object is in the optimal capture plane of the device, starting the image capture phase at this moment. The light signaling band **(5)** is green.
- *Capture:* It start with a first image capture. The CMOS sensor **(16)** takes at least one image of the object (fingers) when it is illuminated by the white light LEDs of the illumination module **(27).** The white LEDs of the illumination module are then switched off, and the green LEDs of the illumination module are activated. The CMOS sensor then reconfigures its capture parameters to adapt to the new lighting condition, and takes one or more finger captures in this situation. Once this second image capture has been taken, the device emits an acoustic signal confirming the completion of the capture process.
- *Busy:* The device is waiting for confirmation of a user's identification/verification. If the recognition is positive, the device emits an affirmative acoustic signal ("access allowed") and the light signaling band **(5)** is green. Otherwise, the acoustic signal is an error signal ("access denied") and the light signaling band is red.

The various functional transitions between the different states of the device are described below (see **FIG-8):**
- *Idle* → *Incorrect position:* An object is detected with the ToF sensor **(4, 12)** at a distance smaller than the preset lower range, i.e. below the optical barrier sensor **(3).**
- *Idle* → *Approximation:* An object is detected within 45∼180 mm from the device (1) with the ToF sensor **(4, 12),** or an object is detected on the infrared barrier **(3, 11).**
- *Approximation* → *Correct position:* An object is detected on the infrared barrier **(3, 11),** with appropriate speed and inclination.
- *Correct position* → *Capture:* The white LEDs of the illumination module **(27)** and the CMOS image sensor **(16)** are checked for activation. It is mandatory to switch from one state to the other in the shortest possible time.
- *Capture* → *Busy:* Once the capture has been made, acquiring at least 2 images, it is obligatory to go this state.
- *Busy* → *Idle:* If after image processing is completed, a nearby object is detected within 45∼180 mm of the device **(1)** with the ToF sensor **(4, 12),** or an object is detected on the infrared barrier sensor **(3, 11),** the device returns to the Idle state.
- *Busy* → *Approximation:* If after image processing is completed, a nearby object is detected at a distance of less than 45∼180 mm from the device **(1)** with the ToF sensor **(4, 12),** or an object is detected on the infrared barrier sensor **(3, 11),** the device passes to the Approximation state.
- *Busy* → *Incorrect position:* The ToF sensor **(4, 12)** detects an object at a shorter distance than the preset distance, i.e. below the infrared barrier sensor **(3).**
- *Incorrect position* → *Idle:* The ToF sensor **(4, 12)** no longer detects an object.
- *Incorrect position* → *Approximation:* The measured distance increases from the preset lower value, and an object is detected at a distance of less than 45∼180 mm from the device **(1)** with the ToF sensor **(4, 12),** or an object is detected on the infrared barrier sensor **(3, 11).**
- *Approximation* → *Incorrect position:* The distance decreases with respect to the preset lower value.

**FIG-9** shows a functional block diagram detailing the sequence of steps required to perform the image capture process with the proposed device. It also shows the other post-capture steps: processing of the fingerprint images, determination of their quality and authenticity (liveliness), and biometric recognition of the fingerprints.

The image capture process shown in **FIG-9** provides at least two different images of the object of interest (fingers), each one of them being taken under a different illumination condition (white light and green light, respectively). The capture of the object (fingers) with a white light (Capture 1), provides useful information for the liveliness or anti-spoofing detection algorithm (e.g., natural skin color and pigmentation, finger shape, texture...), while the capture of the object (fingers) with a green light (Capture 2), provides valuable information for the biometric recognition algorithm (e.g., texture, pattern of ridges and valleys of the fingerprints, minutiae...).

**FIG-10** shows a functional block diagram detailing the sequence of steps necessary to carry out the process of individual segmentation of the region of interest of the fingerprints that are present in the captured fingerprint images (see also the image capture process in **FIG-9).**

Once the individual fingerprint images have been extracted for each of the fingers found, a process of enhancement and simplification of these cropped fingerprint images is initiated to minimise their complexity and facilitate downstream processing. **FIG-11** shows a functional block diagram detailing the sequence of steps followed by the device to carry out this process of enhancement and simplification of the segmented fingerprint images.

Once the segmented individual fingerprints have been processed, a process of checking the quality and authenticity (liveliness) of the fingerprints is initiated. This process is described in detail in **FIG-12,** and is primarily intended to provide an additional level of security to ensure the adequacy of the captured fingerprint images before starting the enrolment process in the device (registration of new users in the database) and/or the biometric user recognition process (1:N identification or 1:1 verification). If this fingerprint verification process does not meet the two mentioned conditions (image quality and liveliness), the process ends, notifying this invalid fingerprint situation by an acoustic **(28)** and light **(5)** error signal (e.g., low tone and red light guide).

The proposed device also allows the enrolment of new users in the database. This enrolment process consists of assigning one or more access credentials (fingerprint, card, mobile phone...) to a given user, and associating these credentials with the identity of that user. In the case of enrolment of biometric credentials, several fingerprint captures of one or more fingers of the same user are recorded (depending on the biometric device used, see **FIG-2). FIG-13** shows a flowchart detailing the steps of the biometric enrolment process of users in the proposed device, which comprises:
1) The capture of *n* = *N* fingerprint replicas of one or more fingers of a user.
2) For each *n* fingerprint of the same finger:
   - The quality value of the fingerprint is determined: *Q_fingerprint*
   - It is checked that: *Q_fingerprint* ≥ *threshold_minQ,* where *threshold_minQ is* a minimum quality threshold value (previously established).
   - It is checked that: *Q_fingerprint> maxQ_find,* where *maxQ_find is* the maximum fingerprint quality value found so far (with initial value 0). If this condition is met, the value of *maxQ_find* is updated with the value of *Q_fingerprint.*
   - If both of the above two conditions are fulfilled, this fingerprint *n* is stored in the database.
3) It is checked that: *n* = *0*. If not, the fingerprint counter to be enrolled is decreased: *n = n-1* and the process of enrolling the next fingerprint is continued (the execution is repeated from step 2). If *n = 0*, it is checked that *maxQ_find>0,* which ensures that at least one fingerprint replica of the desired quality was saved in the database for the enrolled user. In this case, the user's biometric enrollment process will have finished correctly, not being so in any other case. The device will notify the result of the enrolment process by means of acoustic-luminous indications through the buzzer **(28)** and the luminous signaling band of the device **(5).**

Once a database of registered users is available in the system, the proposed device can be used for biometric recognition tasks (1:N identification or 1:1 verification) of users. **FIG-14** shows a functional block diagram detailing the sequence of steps of the 1:N biometric user identification process with the proposed device, when it operates in normal mode:
1) A fingerprint(s) capture is taken from the user.
2) For each captured input fingerprint:
   - Calculate the quality value of the fingerprint: *Q_fingerprint.*
   - Check that: *Q_fingerprint* ≥ *threshold_minQ,* where *threshold_minQ* is a minimum quality threshold value (previously set).
   - If the previous condition is fulfilled, a search (matching 1:N) of said fingerprint within the user database is performed. The process returns the candidate fingerprint from the database with the highest similarity to the unknown input fingerprint, also providing the similarity score value obtained: *score_fingerprint.*
   - It is checked that: *score_fingerprint* > *threshold_min_Score,* where *threshold_min_Score* is a minimum similarity score threshold value (previously set). If this condition is met, the identification process reports the identity of the found user or simply sends the "user found" signal. Otherwise, it indicates that no user could be found. Furthermore, the device notifies the result of the recognition process by means of acoustic-luminous indications via the buzzer (28) and the device's luminous signaling band **(5).**
   - Optionally, as an additional security measure, the device will be able to check whether or not the analyzed input fingerprint corresponds to a genuine fingerprint (anti-spoofing algorithm). In case of detecting a false fingerprint, the process will return the result "user not found or invalid".

At this point, in relation to the user recognition process, different 1:N biometric identification strategies are proposed depending on the level of security required in each operational scenario:
- In the case of capturing the fingerprint of a single finger, the biometric pattern of said fingerprint is extracted, and a 1:N comparison of this pattern is made against all fingerprint patterns stored in the database, thus determining the identity of the user. This strategy corresponds to security level 1 (using a single access credential), which allows a maximum of up to N users in the database (typically 1,000) to ensure acceptable false acceptance rates (FAR) and false rejection rates (FRR) that do not compromise the security and usability of the system.
- In the case of capturing two fingerprints, the quality value of both fingerprints (*Q_fingerprint,* **FIG-14**) is determined. The biometric pattern of both fingerprints is then extracted and a 1:N comparison of the highest quality fingerprint pattern against all patterns stored in the database is performed, thus determining the identity of the user. Once this is done, an additional authentication process of the found user is performed, by performing a 1:1 comparison (verification) of the lowest quality input fingerprint pattern (not previously used in the identification process) against the subset of that user's biometric patterns stored in the database. This strategy corresponds to security level 2 (using a double access credential), which allows a maximum of up to 5*N users in the database (typically 5,000) to ensure acceptable false acceptance rates (FAR) and false rejection rates (FRR), which do not compromise the security and usability of the system.
- In the case of capturing three fingerprints, the quality value of the three fingerprints (*Q_fingerprint,* **FIG-14)** is determined. The biometric pattern of each fingerprint is then extracted, and a 1:N comparison of the highest quality fingerprint pattern against all patterns stored in the database is performed to determine the identity of the user. Once this is done, an additional double authentication process of the found user is performed by performing a 1:1 comparison (verification) of the two remaining lower quality fingerprint patterns (not previously used in the identification process) against the subset of that user's biometric patterns stored in the database. This strategy corresponds to security level 3 (using a triple access credential), allowing a maximum of up to 50*N users in the database (typically 50,000) to ensure acceptable false acceptance rates (FAR) and false rejection rates (FRR), which do not compromise the security and usability of the system.

On the other hand, in order to increase the stability and efficiency of the proposed biometric device in real environments, as well as to minimize maintenance needs, a simple machine learning method for user enrolment is proposed, characterized by allowing an adaptive and automatic update of the reference fingerprint patterns stored in the user database. This method is based on the use of the algorithm mentioned in **FIGs-12-14** to determine the quality of the fingerprint images (*Q_fingerprint*) captured with the device. Based on this quality value (*Q_fingerprint*)*,* and its similarity score (*score_fingerprint*)*,* the proposed learning method poses a partial replacement (gradual over time) of the users' reference fingerprint patterns in the database. This adaptive update of the users' reference patterns aims to provide an agile and effective response to the changing state of the fingerprints over time, which is usually a source of problems in the normal operation of an installation. Thus, it is common for many users to suffer significant changes or deterioration in the state of their fingerprints due to their daily activity (dry, wet, worn, scarred, creamed, dirty fingers...) and/or due to age (loss of the dactylogram with aging, loss of skin elasticity...). In all these cases, a greater variability in the status of the fingerprints generally results in a deterioration of the overall performance of the biometric recognition system, with a substantial increase in the rate of false rejections and the consequent dissatisfaction on the part of users. To solve this problem, the standard solution advocates a re-enrolment of problematic users, reflecting (updating) the current status of their fingerprints at any given moment. However, this re-enrolment process is not usually fast or convenient for users, as it usually has to be carried out in a specific place set up for this purpose (operator station), and under the close supervision of a specialist. To overcome this limitation, an ingenious method of automatic updating of the users' reference fingerprint patterns is proposed, which takes into account the possible variability in the state of the fingerprints over time. This update is performed continuously over time, in a totally unattended and automatic (unsupervised) way, and on any biometric device in the installation, thus reducing the maintenance and supervision costs of the system, and with the added advantage of being a totally transparent process for the users, who will use the system normally, without any additional inconvenience. The proposed method analyses the quality of the fingerprints captured during the normal mode of operation. The quality of these fingerprints (*Q_fingerprint*)*,* and their similarity score (*score_fingerprint*), is compared with that of the reference patterns in the database for a given user, establishing coherent decision rules that allow replacement, under certain circumstances, the existing reference pattern with a new one, in order to reflect a possible manifest and persistent change in the state of a user's fingerprints over time (i.e., a change with measurable repeatability in the quality and similarity score values of a fingerprint after N consecutive captures taken over a given configurable period of time). Ultimately, this adaptability will allow reflecting the changing conditions of fingerprints over time, while doing so in an agile, efficient, automatic and transparent way for users.

In addition to biometric fingerprint recognition (of one or more fingers), the proposed device will also allow the capture of other digital access credentials, such as RFID proximity cards and/or a mobile credential (smartphone). **FIG-15** illustrates some of these access modalities, also indicating the approximate location of the receiving element (RFID antenna **(24)** in **FIG-15B,** or Bluetooth^{®}/NFC module **(26)** in **FIG-15C),** as well as the approximate position of the token (or credential) to allow its reading by the device. This multi-credential approach enables greater flexibility in access, including, among other functionalities, the configuration of the system's security level (according to the requirements of each application and/or use scenario), or the sending of remote credentials via mobile phone to allow physical access for temporary visits to buildings and facilities, without the need to queue at the reception points and/or the credential collection points. This will avoid unnecessary delays and simplify the operational management of these spaces as much as possible.

Finally, **FIG-16** shows another preferred embodiment of the invention in which a biometric device for contactless fingerprint capture of up to three fingers (20) is illustrated, characterized by housing all the components of the system within a compact compartment of reduced dimensions. The main innovation of this device lies in its mechanical and ergonomic design, as it does not have any type of cover, visor, opening or support part for positioning the hand or fingers. The proposed device comprises at least the following elements: an illumination module (comprising high-power LED sources of one or more wavelengths, focusing optical lenses, polarizers...), an image capture module (including a CMOS image sensor, a fixed focal length optical imaging lens, first-surface optical mirrors, polarizers, optical filters.... ), a processing module, a detection module (with one or several proximity sensors), an acoustic-luminous signaling module (buzzer, light guide), and a control module (equipped with different communication interfaces - Bluetooth^{®}, NFC, RFID, TCP/IP, RS-485... - to allow connectivity with other devices).

The operation mode of the device is designed for the user to use his/her hand **(10)** as if it were a conventional proximity card, with the fingers together or slightly apart. The hand **(10)** can move freely in the three-dimensional space (X, Y, Z axes) without any physical constraint, taking only a capture of the fingers when they are in an optimal capture plane **(22)** and within the limits set by the capture window of the device **(7).** Said capture window is made of high-strength transparent glass to allow light to pass through it, and is located at the upper part of the device (see **FIG-16A).** Additionally, such glass may have an oleophobic treatment on its external face to reduce the deposit of dirt and mitigate the problem of latent fingerprints, as well as an anti-reflective treatment on its internal face to prevent reflections of illumination light on the glass.

To facilitate the user positioning the hand "in the air" (see **FIG-16A),** the device incorporates a light signaling frame **(21)** around the capture window **(7).** This light frame **(21)** indicates to the user the active capture zone of the device in the XY plane, while a ToF proximity sensor **(4)** monitors in real time the distance Z (height) at which the hand **(12)** is located with respect to the capture window of the device **(7).** Ideally, to facilitate image capture with the proposed device (see **FIG-16B),** the hand should describe a downward (up-down) approach motion, keeping the fingers of the hand together and extended (palm facing downward), and in a plane parallel **(22)** to that of the capture window **(7).**

The image capture process of the device is only initiated if several simultaneous positioning conditions are met: 1) that the hand (fingertips) passes through the optimal capture plane **(22)** of the device -fixed distance detected by the ToF sensor **(4)** where the object (fingers) is in focus for the image acquisition module-; 2) that the hand (fingertips) falls within the frame delimited by the capture window of the device **(7).** The latter condition is detected by real-time digital image processing (see **FIG-16C),** where the total percentage of pixels of the object (hand) present in the image is checked, as well as the XY position of said object within the window (e.g., if any of the fingertips contact the upper edge of the window).

Such a device is characterized by: 1) the extreme simplicity and cleanliness of its external mechanical design (no visors, walls, openings or supports for the hand or fingers), as all the components of the device are hidden under glass; 2) its ease of use (very fast, convenient and contactless capture), using the hand as if it were a conventional proximity card; 3) its high capacity for integration on any surface (monolithic and compact block of reduced dimensions); and 4) its high security and robustness for biometric user recognition (multi-credential biometric identification with up to three configurable levels of security according to the necessary requirements). It also stands out for allowing the reading of other access credentials: RFID proximity cards and smartphones (mobile credential).

Once the optimal capture conditions mentioned above are met, the device starts the image capture process. This process comprises two main steps that are executed sequentially in time: 1) the illumination module of the device is turned on to illuminate the fingertips from below (e.g., with a green light, white...); 2) one or more images of the object (fingers) are captured with the device's CMOS image sensor. At the optimal capture plane of the device **(22),** the light pattern **(19)** emitted by the illumination module has a homogeneous and intense appearance, allowing an adequate contrast of the object (fingers) for sharp fingerprint capture (see **FIG-16C).**

Finally, once the image of the object of interest (fingers) has been captured with the proposed device **(20),** a digital image processing step is carried out to try to extract the region of interest (ROI) of the individual fingerprints. This process is illustrated in **FIG-17** and comprises the following steps:
A) An image of the scene background (before detecting the object) is captured.
B) An image of the object (fingers) is captured.
C) The scene background is subtracted.
D) Image thresholding and determination of the binary segmentation mask of the object (hand).
E) Search and detection of closed contours in the image. Estimation of the individual segmentation masks for each of the fingers present in the image.
F) Individual segmentation of each finger and cropping of the region of interest (ROI) of the fingerprints.
G) Obtaining the segmented (cropped) fingerprint images and further processing of them to improve their quality and simplify their complex nature as much as possible.

It should be noted that most of the steps in this digital processing stage will be identical to those already mentioned for the processes in **FIGs-10-14.** Similarly, the enrolment and biometric user recognition processes mentioned in **FIGs-13-14** will also be analogous.

Finally, as a conclusion of what has been presented in this document, several preferred embodiments of the invention are detailed, describing a biometric device for contactless fingerprint capture of up to 3 different fingers, characterized by performing this process in a fast (less than 1 second), convenient (without obstacles, barriers or supports for the fingers or hand), intuitive (acoustic-luminous signaling elements to facilitate the user the correct positioning of the finger(s) during the capture), hygienic (without contact), and with maximum security and robustness in the biometric user recognition (latest generation contactless multi-fingerprint biometrics, liveliness detection, adaptive and automated fingerprint enrolment method, etc.).

In addition to multi-fingerprint biometric identification, the proposed device also contemplates the use of other digital access credentials through the NFC and Bluetooth^{®} technologies of smartphones (mobile credential), and/or the use of RFID proximity cards. These digital credentials, carried on users' own smartphones, will be particularly interesting for the management of temporary visits (sending remote credentials via email, online registration, etc.), thus avoiding queues and unnecessary waiting times at reception points of large facilities and corporate buildings. Mobile credentials will also eliminate the costs associated with the logistics of delivery and collection of conventional physical credentials (e.g., RFID proximity cards).

The proposed biometric device is especially designed for 1:N identification and/or 1:1 verification of users in access control systems, where the access of a large volume of users (from 1,000 to 50,000) needs to be validated in a fully secure manner and in short periods of time, such as, for example, office environments, hospitals, universities, industrial facilities, large corporate buildings, residential complexes, etc. Therefore, one of the critical design parameters is the response time of the device (less than 1 second). This fast response time guarantees efficient access control at peak times of maximum influx, avoiding or minimizing the formation of queues or crowds at the entrances and exits of the controlled areas. Another important aspect to highlight is the ease of use (ergonomics) of the device, which aims to achieve a double objective: on the one hand, to reduce response times as much as possible, and on the other hand, to increase the quality of the captured fingerprint images.

On the other hand, being able to have up to three different fingerprints for the identification of a user provides an excellent opportunity to develop different multi-credential identification strategies, depending on the level of security required for each scenario of use and/or application. Thus, for example, in ultra-high security scenarios, such as critical infrastructures, bank offices or jewelry stores, the three fingerprints of a user could be used to reliably ensure their identification, making any attempt at identity theft almost impossible. In less restrictive scenarios, such as office environments or public spaces, where security is not as important, one of the three fingerprints could be used to identify the user and, then, a different fingerprint could be used to verify the user's identity (dual credential). Likewise, another advantage of having multiple fingerprints to identify users is, undoubtedly, the reduction in the rate of false rejections due to poor quality of the fingerprints, since although some of them may be problematic (dry, worn, scars, etc.), there will always be one that is of sufficient quality to be able to reliably identify the user. This will result, a priori, in a better user experience and, therefore, in a greater acceptance of the product.

## Claims

1. A biometric device for contactless fingerprint capture from one or more fingers, comprising:
- an external mechanical housing or enclosure **(9),** made of a resistant material, which encloses and protects all the elements of the device, and which also includes a transparent glass window **(7),**
- several internal supporting parts, made of insulating material, which fix and isolate the optical and electronic components of the system,
- an optimal capture area **(2)** "in the air" equipped with:
∘ at least one optical barrier sensor **(3),** coinciding with the optimal capture area **(2)** of the system, which allows detecting any object that passes through the capture area,
∘ at least one proximity sensor **(4)** by means of a ToF sensor, which allows determining the distance, speed and/or inclination of an object approaching the capture area of the system,
∘ a light guide or light signaling band **(5)** that is coincident with the optimal capture area, which indicates to the user where to position the finger(s) in free space for the suitable fingerprint capture, wherein the light guide provides visual information on the system status (e.g., standby, finger detected in the capture area, access valid, access denied, and equipment rebooting, where each of these states is coded with a different color),
- an acoustic signaling module (28), which indicates to the user the status of the system e.g., capture performed, access valid, access denied, and equipment rebooting,
- a dynamic illumination module **(6, 27),** equipped with high-power LED light sources **(13)** and optical lenses **(6),** which project a uniform and intense light pattern onto the fingers that are located within the optimal capture area of the device,
- an image acquisition module **(8)** wherein a CMOS sensor and the associated optics are equipped, which enables the capture of high-resolution images of one or more fingers passing through the optimal capture area of the device,
- a processing module **(17),** equipped with a processor and the necessary software programs and algorithms to perform digital processing of the finger images that have been captured with the image acquisition module **(8)** of the device, comprising:
∘ individual segmentation of the fingers present in the image,
∘ segmentation of the region of interest of the fingerprints,
∘ adaptation of touchless fingerprint images, live-finger detection, determination of fingerprint quality,
∘ biometric user recognition:
▪ feature extraction from fingerprint images,
▪ biometric pattern matching,
▪ management and storage of the user database,
∘ implementation of the control logic of an access control system:
▪ management of user access permissions,
▪ signaling of opening/closing of physical elements of the system,
- a control module, wherein the connectivity with other devices is allowed throughout established communication interfaces, wherein the various high-power LED light sources in the dynamic illumination module **(6, 27)** may have different wavelengths in the range of 400-700 nm, and the optical lenses **(6)** are plano-convex lenses to focus the light beams onto the optimal capture plane **(2)** of the device, wherein the inclination of each plano-convex lens is different depending on the position of its corresponding high-power LED light source (**13**).

2. A biometric device for contactless fingerprint capture according to claim 1, wherein the various high-power LED light sources in the dynamic illumination module **(6, 27)** may have an illumination pattern that is directly incident on the inner face of the fingers for a transient period between 50-150 ms.

3. A biometric device for contactless fingerprint capture according to claim 1 or 2, wherein the various high-power LED light sources of the dynamic illumination module **(6, 27)** may have different wavelengths and may be positioned around the imaging module **(8, 16)** of the device by forming a ring of illumination around the CMOS sensor.

4. A biometric device for contactless fingerprint capture according to any of the preceding claims, wherein the high-power LED light sources operate both dynamically and sequentially to generate varying illuminations of the object of interest, while the image acquisition module of the device operates synchronously with the dynamic illumination module to capture one or more images of the object of interest under different illumination conditions.

5. A biometric device for contactless fingerprint capture according to any of the preceding claims, wherein
- the at least one optical barrier sensor (3) allows a rapid and reliable detection of an object passing through the capture area and which is located at a fixed distance between 60∼120 mm from the longitudinal axis of the CMOS sensor in the image acquisition module **(8, 16)** of the device.
- the light guide or luminous signaling band (5) is located just above the optical barrier sensor **(3),** which indicates to the user where to place the finger(s) in the air to ensure proper finger capture, wherein this light guide comprises:
∘ an electronic board with a set of RGB LEDs whose brightness and color can be configured via software from the processing module of the device;
∘ a plastic diffuser piece, made of a translucent material, which insulates and protects the LEDs from the outside and allows light to pass through it.

6. A biometric device for contactless fingerprint capture according to any of the preceding claims, wherein the image acquisition module **(8, 16)** comprises:
- a color CMOS image sensor **(16)** of size 1/3"-1.25", with a minimum resolution between 1~3 MP, global shutter detection technology and a frame acquisition rate between 30~64 fps, wherein the CMOS sensor is located at a fixed distance between 60∼120 mm from the optical barrier sensor **(3)** of the device,
- an optical lens (14) with a fixed focal length that may be in the range of 8∼16 mm, located directly in front of the CMOS sensor, and that may incorporate a fixed size diaphragm aperture (15) which may range in number from F5.6~F11 to reduce the amount of light passing through the lens,
- an ultra-resistant transparent glass window **(7)** with 1~2 mm thickness, which protects and insulates the elements of both the image acquisition module and the illumination module of the device, wherein this glass window may be treated with an oleophobic coating on its external face which helps to minimize the effect of latent fingerprints, and with an anti-reflective coating on its internal face which prevents both direct and indirect reflections of the illumination on the glass surface.

7. A biometric device for contactless fingerprint capture according to any of the preceding claims, wherein the control module may include at least one miniaturized processor, a memory module for secure data storage, several power supply modules of different voltages and currents, configurable digital input and output modules, communication interface modules for sending and/or receiving data to/from the device, together with a set of software programs and processing algorithms to perform the biometric recognition of the touchless fingerprints that have been captured with the device, as well as the logical operations of an access control system.

8. A method of capturing and processing contactless fingerprints using the biometric device according to any one of claims 1 to 7, comprising the steps of:
- detection of an object or finger(s) passing through a predefined capture area or plane, by combining information from an optical barrier sensor and a ToF proximity sensor to rapidly and accurately determine the proper position of the finger(s) within the capture zone of the device, which in turn provides instant feedback to the user in correctly positioning the finger(s) within the optimal capture zone by acoustic-luminous indicators,
- initialization of the image acquisition module and activation of the illumination module, wherein the illumination module projects a uniform and intense light pattern on the object of interest and wherein the wavelength may be varied dynamically during the flash of the light,
- activation of the capture process in the image acquisition module just when the object of interest crosses the optimal capture plane that is delimited by the optical barrier sensor; the device may also incorporate a light signaling band which is located just above the optical barrier sensor to indicate to the user the target place where to position the finger(s) for capturing,
- detection of the position of the object of interest within the acquired images, wherein digital image processing is performed to firstly determine the position of the finger(s) that are present in the image, and then proceed to their individual segmentation, followed by a stage of searching and cropping the area of interest of the fingerprints, namely the fingertip, as well as the digital processing associated to these cropped fingerprints to improve the image quality and simplify the complex nature of the contactless fingerprints,
- liveliness detection using an anti-spoofing algorithm to determine whether or not an input contactless fingerprint image corresponds to that of a genuine finger, wherein the algorithm uses artificial intelligence techniques based on trained mathematical models,
- detection of the quality of the captured touchless fingerprints by means of an algorithm that determines whether or not an input fingerprint image fulfills a preset quality to start the enrolment and/or biometric recognition process of the device; when the input fingerprint image does not fulfill the preset quality, the device will not continue with the fingerprint enrolment process and/or with the biometric recognition step, wherein this fingerprint quality algorithm, together with the anti-spoofing algorithm, may become an additional security filter for the enrolment and/or biometric recognition process of the device, which in turn minimizes the error rate due to unauthorized accesses,
- extracting features from the contactless fingerprint image by means of an advanced biometric algorithm that allows obtaining the biometric pattern of an input fingerprint, wherein this biometric pattern is matched with other biometric patterns previously stored in the database to perform the biometric user recognition process: 1:N identification and/or 1:1 verification.

9. A touchless fingerprint recognition method for one or more fingers according to claim 8, **characterized by** implementing several biometric identification strategies according to the required security level, at least the following strategies being established:
- in case of capturing a single fingerprint, the biometric pattern of this fingerprint is extracted and a 1:N comparison of this pattern against all fingerprint patterns stored in the database is performed to determine the identity of the user; this strategy corresponds to security level 1, using a single access credential, which allows a maximum of up to N users in the database, typically 1.000 users, while ensuring acceptable False Acceptance Rates (FAR) and False Rejection Rates (FRR) without compromising the security and usability of the system,
- in case of capturing two fingerprints, the quality value of both fingerprints is determined, as well as the biometric pattern of each fingerprint, and a 1:N comparison of the fingerprint pattern with the highest image quality against all patterns stored in the database is performed to determine the identity of the user; once these steps are completed, an additional authentication process of the identified user is performed, which renders a 1:1 comparison of the remaining fingerprint pattern (not previously used in the identification process) against the subset of fingerprint patterns of the identified user that are stored in the database; this strategy corresponds to security level 2, as it employs a double access credential, which allows a maximum of up to 5*N users in the database, typically 5.000 users, while ensuring acceptable False Acceptance Rates (FAR) and False Rejection Rates (FRR) without compromising the security and usability of the system,
- in case of capturing three fingerprints, the quality value of the three fingerprints is determined, as well as the biometric pattern of each fingerprint, and a 1:N comparison of the fingerprint pattern with the highest quality against all patterns stored in the database is performed to determine the identity of the user; once these steps are completed, an additional double authentication process of the identified user is performed, which carries out a 1: 1 comparison of the remaining, lower-quality fingerprint patterns that have not been previously used in the identification process, against the subset of fingerprint patterns of the identified user stored in the database; this strategy corresponds to security level 3, as it employs a triple access credential, which allows a maximum of up to 50*N users in the database, typically 50.000 users, while ensuring acceptable False Acceptance Rates (FAR) and False Rejection Rates (FRR) without compromising the security and usability of the system.

10. A machine learning method for user enrolment that allows an adaptive and automatic updating of the reference fingerprint patterns of the users over time, wherein the method of claim 8 is used to determine the quality of the touchless fingerprint images captured with the device and wherein the machine learning method determines the quality of the touchless fingerprints captured during normal operation as well as the similarity score among them, by comparing the estimates values with those of the reference patterns stored in the database for a given user, consistent decision rules can be established to replace, under certain circumstances, the existing reference pattern by an updated pattern that reflects a manifest and persistent change in the state of a user's fingerprints over time.

## Patentansprüche

1. Biometrische Vorrichtung zur berührungslosen Erfassung von Fingerabdrücken von einem oder mehreren Fingern, umfassend:
- ein äußeres mechanisches Gehäuse **(9)** aus widerstandsfähigem Material, das alle Elemente der Vorrichtung umschließt und schützt und das auch ein durchsichtiges Glasfenster **(7)** enthält,
- mehrere interne Stützteile aus Isoliermaterial, welche die optischen und elektronischen Komponenten des Systems fixieren und isolieren,
- einen optimalen Erfassungsbereich **(2)** "in der Luft", der ausgestattet ist mit:
∘ mindestens einem optischen Schrankensensor (3), der mit dem optimalen Erfassungsbereich **(2)** des Systems übereinstimmt und das Erkennen jedes Objekts ermöglicht, das den Erfassungsbereich passiert,
∘ mindestens einem Näherungssensor **(4)** mittels eines ToF-Sensors, der es ermöglicht, die Entfernung, die Geschwindigkeit und/oder die Neigung eines sich dem Erfassungsbereich des Systems nähernden Objekts zu bestimmen,
∘ einem Lichtleiter oder einem Lichtsignalband **(5),** das mit dem optimalen Erfassungsbereich übereinstimmt und dem Benutzer anzeigt, wo der/die Finger im freien Raum für die geeignete Fingerabdruckerfassung zu positionieren ist/sind, wobei der Lichtleiter visuelle Informationen über den Systemstatus liefert (z. B. Bereitschaft, Finger im Erfassungsbereich erkannt, Zugang gültig, Zugang verweigert und Neustart des Geräts, wobei jeder dieser Zustände mit einer anderen Farbe codiert ist),
- ein akustisches Signalisierungsmodul (28), das dem Benutzer den Status des Systems anzeigt, z. B. Erfassung durchgeführt, Zugang gültig, Zugang verweigert und Neustart des Geräts,
- ein dynamisches Beleuchtungsmodul **(6, 27),** das mit Hochleistungs-LED-Lichtquellen **(13)** und optischen Linsen **(6)** ausgestattet ist, die ein gleichmäßiges und intensives Lichtmuster auf die Finger projizieren, die sich im optimalen Erfassungsbereich der Vorrichtung befinden,
- ein Bilderfassungsmodul **(8),** das mit einem CMOS-Sensor und der zugehörigen Optik ausgestattet ist und die Aufnahme von hochauflösenden Bildern eines oder mehrerer Finger ermöglicht, die den optimalen Erfassungsbereich der Vorrichtung passieren,
- ein Verarbeitungsmodul **(17),** das mit einem Prozessor und den erforderlichen Softwareprogrammen und Algorithmen ausgestattet ist, um eine digitale Verarbeitung der Fingerbilder durchzuführen, die mit dem Bilderfassungsmodul **(8)** der Vorrichtung aufgenommen wurden, umfassend:
∘ individuelle Segmentierung der im Bild vorhandenen Finger,
∘ Segmentierung der interessierenden Region der Fingerabdrücke,
∘ Anpassung von berührungslosen Fingerabdruckbildern, Live-Fingererkennung,
Bestimmung der Qualität von Fingerabdrücken,
∘ biometrische Benutzererkennung:
▪ Merkmalsextraktion aus Fingerabdruckbildern,
▪ Biometrischer Musterabgleich,
▪ Verwaltung und Speicherung der Benutzerdatenbank,
∘ Implementierung der Kontrolllogik eines Zugangskontrollsystems:
▪ Verwaltung von Benutzerzugriffsberechtigungen,
▪ Signalisierung des Öffnens/Schließens von physischen Elementen des Systems,
- ein Steuermodul, wobei die Konnektivität mit anderen Vorrichtungen über etablierte Kommunikationsschnittstellen ermöglicht wird,
wobei die verschiedenen Hochleistungs-LED-Lichtquellen in dem dynamischen Beleuchtungsmodul **(6, 27)** unterschiedliche Wellenlängen im Bereich von 400-700 nm aufweisen können, und die optischen Linsen **(6)** plankonvexe Linsen sind, um die Lichtstrahlen auf die optimale Erfassungsebene **(2)** der Vorrichtung zu fokussieren, wobei die Neigung jeder plankonvexen Linse abhängig von der Position ihrer entsprechenden Hochleistungs-LED-Lichtquelle **(13)** unterschiedlich ist.

2. Biometrische Vorrichtung zur berührungslosen Erfassung von Fingerabdrücken nach Anspruch 1, wobei die verschiedenen Hochleistungs-LED-Lichtquellen in dem dynamischen Beleuchtungsmodul **(6, 27)** ein Beleuchtungsmuster aufweisen können, das vorübergehend 50-150 ms lang direkt auf die Innenfläche der Finger fällt.

3. Biometrische Vorrichtung zur berührungslosen Fingerabdruckerfassung nach Anspruch 1 oder 2, wobei die verschiedenen Hochleistungs-LED-Lichtquellen des dynamischen Beleuchtungsmoduls **(6, 27)** unterschiedliche Wellenlängen aufweisen können und um das Bildgebungsmodul **(8, 16)** der Vorrichtung herum positioniert werden können, indem sie einen Beleuchtungsring um den CMOS-Sensor bilden.

4. Biometrische Vorrichtung zur berührungslosen Fingerabdruckerfassung nach einem der vorhergehenden Ansprüche, wobei die Hochleistungs-LED-Lichtquellen sowohl dynamisch als auch sequenziell arbeiten, um unterschiedliche Beleuchtungen des interessierenden Objekts zu erzeugen, während das Bilderfassungsmodul der Vorrichtung synchron mit dem dynamischen Beleuchtungsmodul arbeitet, um ein oder mehrere Bilder des interessierenden Objekts unter unterschiedlichen Beleuchtungsbedingungen aufzunehmen.

5. Biometrische Vorrichtung zur berührungslosen Erfassung von Fingerabdrücken nach einem der vorhergehenden Ansprüche, wobei
- der mindestens eine optische Schrankensensor (3) eine schnelle und zuverlässige Erkennung eines Objekts ermöglicht, das den Erfassungsbereich passiert und sich in einem festen Abstand zwischen 60∼120 mm von der Längsachse des CMOS-Sensors im Bilderfassungsmodul **(8, 16)** der Vorrichtung befindet.
- der Lichtleiter oder das leuchtende Signalband (5) direkt über dem optischen Schrankensensor **(3)** angeordnet ist, der dem Benutzer anzeigt, wo er den/die Finger in der Luft platzieren muss, um eine korrekte Fingererfassung zu gewährleisten, wobei dieser Lichtleiter umfasst:
∘ eine elektronische Platine mit einer Reihe von RGB-LEDs, deren Helligkeit und Farbe per Software über das Verarbeitungsmodul der Vorrichtung konfiguriert werden können,
∘ ein Kunststoffdiffusor aus einem lichtdurchlässigen Material, der die LEDs von außen isoliert und schützt und das Licht durchlässt.

6. Biometrische Vorrichtung zur berührungslosen Fingerabdruckerfassung nach einem der vorhergehenden Ansprüche, wobei das Bilderfassungsmodul **(8, 16)** umfasst:
- einen Farb-CMOS-Bildsensor **(16)** der Größe 1/3"-1,25", mit einer Mindestauflösung zwischen 1~3 MP, Global-Shutter-Detektionstechnologie und einer Bilderfassungsrate zwischen 30∼64 fps, wobei der CMOS-Sensor in einem festen Abstand zwischen 60∼120 mm von dem optischen Schrankensensor **(3)** der Vorrichtung angeordnet ist,
- eine optische Linse (14) mit einer festen Brennweite, die im Bereich zwischen 8∼16 mm liegen kann, die direkt vor dem CMOS-Sensor angeordnet ist und die eine Blendenöffnung (15) mit fester Größe enthalten kann, die im Bereich von F5,6 bis F11 liegen kann, um die Lichtmenge zu reduzieren, die durch die Linse hindurchgeht,
- ein extrem widerstandsfähiges transparentes Glasfenster **(7)** mit 1~2 mm Dicke, das die Elemente sowohl des Bilderfassungsmoduls als auch des Beleuchtungsmoduls der Vorrichtung schützt und isoliert, wobei dieses Glasfenster mit einer oleophoben Beschichtung auf seiner Außenfläche, die dazu beiträgt, die Wirkung latenter Fingerabdrücke zu minimieren, und mit einer Antireflexionsbeschichtung auf seiner Innenfläche, die sowohl direkte als auch indirekte Reflexionen der Beleuchtung auf der Glasoberfläche verhindert, behandelt werden kann.

7. Biometrische Vorrichtung zur berührungslosen Erfassung von Fingerabdrücken nach einem der vorhergehenden Ansprüche, wobei das Steuermodul mindestens einen miniaturisierten Prozessor, ein Speichermodul zur sicheren Datenspeicherung, mehrere Stromversorgungsmodule mit unterschiedlichen Spannungen und Strömen, konfigurierbare digitale Eingangs- und Ausgangsmodule, Kommunikationsschnittstellenmodule zum Senden und/oder Empfangen von Daten zu/von der Vorrichtung sowie einen Satz Softwareprogramme und Verarbeitungsalgorithmen zur Durchführung der biometrischen Erkennung der berührungslosen Fingerabdrücke, die mit der Vorrichtung erfasst wurden, sowie der logischen Operationen eines Zugangskontrollsystems umfassen kann.

8. Verfahren zum Erfassen und Verarbeiten von berührungslosen Fingerabdrücken unter Verwendung der biometrischen Vorrichtung nach einem der Ansprüche 1 bis 7, das die folgenden Schritte umfasst:
- Erkennung eines Objekts oder Fingers (von Fingern), das/der/die einen vordefinierten Erfassungsbereich oder eine Ebene passiert/passieren, durch Kombination von Informationen von einem optischen Schrankensensor und einem ToF-Näherungssensor, um schnell und genau die richtige Position des/der Finger/s innerhalb des Erfassungsbereichs der Vorrichtung zu bestimmen, was wiederum dem Benutzer eine sofortige Rückmeldung über die korrekte Positionierung des/der Finger/s innerhalb des optimalen Erfassungsbereichs durch akustisch-leuchtende Indikatoren gibt,
- Initialisierung des Bilderfassungsmoduls und Aktivierung des Beleuchtungsmoduls, wobei das Beleuchtungsmodul ein gleichmäßiges und intensives Lichtmuster auf das interessierende Objekt projiziert und wobei die Wellenlänge während des Lichtblitzes dynamisch variiert werden kann,
- Aktivierung des Erfassungsprozesses im Bilderfassungsmodul, wenn das interessierende Objekt die optimale Erfassungsebene, die durch den optischen Schrankensensor abgegrenzt ist, passiert; die Vorrichtung kann auch ein Lichtsignalband enthalten, das sich direkt über dem optischen Schrankensensor befindet, um dem Benutzer die Zielstelle anzuzeigen, an der er den/die Finger zur Erfassung positionieren soll,
- Erkennung der Position des interessierenden Objekts innerhalb der aufgenommenen Bilder, wobei eine digitale Bildverarbeitung durchgeführt wird, um zunächst die Position des Fingers oder der Finger zu bestimmen, die im Bild vorhanden sind, und dann zu ihrer individuellen Segmentierung überzugehen, gefolgt von einer Phase der Suche und des Zuschneidens des interessierenden Bereichs der Fingerabdrücke, nämlich der Fingerspitze, sowie der mit diesen zugeschnittenen Fingerabdrücken einhergehenden digitalen Verarbeitung, um die Bildqualität zu verbessern und die komplexe Natur der berührungslosen Fingerabdrücke zu vereinfachen,
- Lebenderkennung unter Verwendung eines Anti-Spoofing-Algorithmus, um zu bestimmen, ob ein eingegebenes berührungsloses Fingerabdruckbild dem eines echten Fingers entspricht oder nicht, wobei der Algorithmus Techniken der künstlichen Intelligenz verwendet, die auf trainierten mathematischen Modellen basieren,
- Erkennung der Qualität der erfassten berührungslosen Fingerabdrücke mittels eines Algorithmus, der bestimmt, ob ein eingegebenes Fingerabdruckbild eine vorgegebene Qualität erfüllt oder nicht, um den Registrierungs- und/oder biometrischen Erkennungsprozess der Vorrichtung zu starten; wenn das eingegebene Fingerabdruckbild nicht die voreingestellte Qualität erfüllt, fährt die Vorrichtung nicht mit dem Fingerabdruckregistrierungsprozess und/oder dem biometrischen Erkennungsschritt fort, wobei dieser Fingerabdruckqualitätsalgorithmus zusammen mit dem Anti-Spoofing-Algorithmus zu einem zusätzlichen Sicherheitsfilter für den Registrierungs- und/oder biometrischen Erkennungsprozess der Vorrichtung werden kann, was wiederum die Fehlerrate aufgrund von unbefugten Zugriffen minimiert,
- Extrahieren von Merkmalen aus dem berührungslosen Fingerabdruckbild mittels eines fortschrittlichen biometrischen Algorithmus, der es ermöglicht, das biometrische Muster eines eingegebenen Fingerabdrucks zu erhalten, wobei dieses biometrische Muster mit anderen biometrischen Mustern abgeglichen wird, die zuvor in der Datenbank gespeichert wurden, um den biometrischen Benutzererkennungsprozess durchzuführen: 1:N-Identifikation und/oder 1:1-Verifikation.

9. Verfahren zur berührungslosen Erkennung von Fingerabdrücken für einen oder mehrere Finger nach Anspruch 8, **dadurch gekennzeichnet, dass** mehrere biometrische Identifikationsstrategien entsprechend dem geforderten Sicherheitsniveau implementiert werden, wobei zumindest die folgenden Strategien festgelegt werden:
- Im Falle der Erfassung eines einzelnen Fingerabdrucks wird das biometrische Muster dieses Fingerabdrucks extrahiert und ein 1:N-Vergleich dieses Musters mit allen in der Datenbank gespeicherten Fingerabdruckmustern durchgeführt, um die Identität des Benutzers festzustellen; diese Strategie entspricht der Sicherheitsstufe 1 mit einer einzigen Zugangsberechtigung, die maximal bis zu N Benutzer in der Datenbank zulässt, in der Regel 1.000 Benutzer, und gleichzeitig akzeptable Falschakzeptanzraten (FAR) und Falschrückweisungsraten (FRR) gewährleistet, ohne die Sicherheit und Benutzerfreundlichkeit des Systems zu beeinträchtigen,
- Im Falle der Erfassung von zwei Fingerabdrücken wird der Qualitätswert beider Fingerabdrücke sowie das biometrische Muster jedes Fingerabdrucks bestimmt, und es wird ein 1:N-Vergleich des Fingerabdruckmusters mit der höchsten Bildqualität mit allen in der Datenbank gespeicherten Mustern durchgeführt, um die Identität des Benutzers festzustellen; sobald diese Schritte abgeschlossen sind, wird ein zusätzlicher Authentifizierungsprozess des identifizierten Benutzers durchgeführt, der einen 1:1-Vergleich des verbleibenden Fingerabdruckmusters (das zuvor nicht im Identifikationsprozess verwendet wurde) mit der in der Datenbank gespeicherten Teilmenge der Fingerabdruckmuster des identifizierten Benutzers vornimmt; diese Strategie entspricht der Sicherheitsstufe 2, da sie eine doppelte Zugangsberechtigung verwendet, die maximal bis zu 5*N Benutzer in der Datenbank zulässt, in der Regel 5.000 Benutzer, und gleichzeitig akzeptable Falschakzeptanzraten (FAR) und Falschrückweisungsraten (FRR) gewährleistet, ohne die Sicherheit und Benutzerfreundlichkeit des Systems zu beeinträchtigen,
- Im Falle der Erfassung von drei Fingerabdrücken wird der Qualitätswert der drei Fingerabdrücke sowie das biometrische Muster jedes Fingerabdrucks bestimmt, und es wird ein 1:N-Vergleich des Fingerabdruckmusters mit der höchsten Bildqualität mit allen in der Datenbank gespeicherten Mustern durchgeführt, um die Identität des Benutzers festzustellen; sobald diese Schritte abgeschlossen sind, wird ein zusätzlicher doppelter Authentifizierungsprozess des identifizierten Benutzers durchgeführt, der einen 1:1-Vergleich der verbleibenden Fingerabdruckmuster geringerer Qualität, die zuvor nicht im Identifikationsprozess verwendet wurden, mit der in der Datenbank gespeicherten Teilmenge der Fingerabdruckmuster des identifizierten Benutzers vornimmt; diese Strategie entspricht der Sicherheitsstufe 3, da sie eine dreifache Zugangsberechtigung verwendet, die maximal bis zu 50*N Benutzer in der Datenbank zulässt, in der Regel 50.000 Benutzer, und gleichzeitig akzeptable Falschakzeptanzraten (FAR) und Falschrückweisungsraten (FRR) gewährleistet, ohne die Sicherheit und Benutzerfreundlichkeit des Systems zu beeinträchtigen.

10. Maschinelles Lernverfahren für die Benutzerregistrierung, das eine adaptive und automatische Aktualisierung der Referenz-Fingerabdruckmuster der Benutzer im Zeitverlauf ermöglicht, wobei das Verfahren nach Anspruch 8 verwendet wird, um die Qualität der berührungslosen Fingerabdruckbilder zu bestimmen, die mit der Vorrichtung aufgenommen wurden, und wobei das maschinelle Lernverfahren die Qualität der berührungslosen Fingerabdrücke, die während des normalen Betriebs erfasst wurden, sowie den Ähnlichkeitswert zwischen ihnen bestimmt, durch Vergleichen der Schätzwerte mit denen der in der Datenbank für einen bestimmten Benutzer gespeicherten Referenzmuster können konsistente Entscheidungsregeln aufgestellt werden, um unter bestimmten Umständen das bestehende Referenzmuster durch ein aktualisiertes Muster zu ersetzen, das eine offensichtliche und anhaltende Änderung des Zustands der Fingerabdrücke eines Benutzers im Zeitverlauf widerspiegelt.

## Revendications

1. Dispositif biométrique pour la capture d'empreinte digitale sans contact d'un ou plusieurs doigts, comprenant :
- un boîtier ou une enceinte mécanique externe **(9),** constitué(e) d'un matériau résistant, qui renferme et protège tous les éléments du dispositif et qui comporte également une fenêtre en verre transparent **(7),**
- plusieurs pièces de support internes, constituées d' matériau isolant, qui fixent et isolent les composants optiques et électroniques du système,
- une zone de capture optimale **(2)** « dans l'air » équipée de :
∘ au moins un capteur de barrière optique (3), coïncidant avec la zone de capture optimale **(2)** du système, qui permet de détecter un quelconque objet qui passe à travers la zone de capture,
∘ au moins un capteur de proximité **(4)** au moyen d'un capteur ToF, qui permet de déterminer la distance, la vitesse et/ou l'inclinaison d'un objet s'approchant de la zone de capture du système,
∘ un guide lumineux ou une bande de signalisation lumineuse **(5)** qui coïncide avec la zone de capture optimale, qui indique à l'utilisateur où positionner le(s) doigt(s) dans l'espace libre pour capturer l'empreinte digitale appropriée, dans lequel le guide lumineux fournit des informations visuelles sur l'état de système (par ex., en attente, doigt détecté dans la zone de capture, accès valide, accès refusé et redémarrage de l'équipement, où chacun de ces états est codé par une couleur différente),
- un module de signalisation acoustique (28), qui indique à l'utilisateur l'état du système, par ex., capture réalisée, accès valide, accès refusé et redémarrage de l'équipement,
- un module d'éclairage dynamique **(6, 27),** équipé de sources lumineuses à DEL haute puissance **(13)** et de lentilles optiques **(6),** qui projettent une lumière uniforme et intense sur les doigts situés au sein de la zone de capture optimale du dispositif,
- un module d'acquisition d'images **(8)** dans lequel un capteur CMOS et les optiques associées sont équipés, qui permet la capture d'images à haute résolution d'un ou plusieurs doigts passant à travers la zone de capture optimale du dispositif,
- un module de traitement **(17),** équipé d'un processeur et des programmes logiciels et algorithmes nécessaires pour réaliser un traitement numérique des images de doigt qui ont été capturées avec le module d'acquisition d'images **(8)** du dispositif, comprenant :
∘ segmentation individuelle des doigts présents dans l'image,
∘ segmentation de la région d'intérêt des empreintes digitales,
∘ adaptation de l'image d'empreinte digitale sans toucher, détection de doigt vivace,
détermination de qualité d'empreinte digitale,
∘ reconnaissance biométrique d'utilisateur :
▪ extraction de caractéristiques à partir d'images d'empreinte digitale,
▪ mise en correspondance de motif biométrique,
▪ gestion et stockage de la base de données d'utilisateurs,
∘ mise en œuvre de la logique de contrôle d'un système de contrôle d'accès :
▪ gestion des permissions d'accès d'utilisateurs,
▪ signalisation de l'ouverture/fermeture d'éléments physiques du système,
- un module de contrôle, dans lequel la connectivité avec d'autres dispositifs est permise par l'intermédiaire d'interfaces de communication établies,
dans lequel les diverses sources lumineuses à DEL haute puissance dans le module d'éclairage dynamique (6, 27) peuvent avoir différentes longueurs d'onde dans la plage de 400 à 700 nm, et les lentilles optiques (6) sont des lentilles plan-convexes pour focaliser les faisceaux lumineux sur le plan de capture optimal (2) du dispositif, dans lequel l'inclinaison de chaque lentille plan-convexe est différente en fonction de la position de sa source lumineuse à DEL haute puissance (13) correspondante.

2. Dispositif biométrique pour la capture d'empreinte digitale sans contact selon la revendication 1, dans lequel les diverses sources lumineuses à DEL haute puissance du module d'éclairage dynamique (**6, 27**) peuvent avoir un motif d'éclairage qui est directement incident sur la face interne des doigts pendant une période transitoire comprise entre 50 et 150 ms.

3. Dispositif biométrique pour la capture d'empreinte digitale sans contact selon la revendication 1 ou 2, dans lequel les diverses sources lumineuses à DEL de haute puissance du module d'éclairage dynamique (**6, 27**) peuvent avoir différentes longueurs d'onde et peuvent être positionnées autour du module d'imagerie (**8, 16**) du dispositif en formant un anneau d'éclairage autour du capteur CMOS.

4. Dispositif biométrique pour la capture d'empreinte digitale sans contact selon l'une quelconque des revendications précédentes, dans lequel les sources lumineuses à DEL haute puissance fonctionnent de manière à la fois dynamique et séquentielle pour générer des éclairages variables de l'objet d'intérêt, tandis que le module d'acquisition d'images du dispositif fonctionne de manière synchronisée avec le module d'éclairage dynamique pour capturer une ou plusieurs images de l'objet d'intérêt dans différentes conditions d'éclairage.

5. Dispositif biométrique pour la capture d'empreinte digitale sans contact selon l'une quelconque des revendications précédentes, dans lequel
- l'au moins un capteur de barrière optique (3) permet une détection rapide et fiable d'un objet passant à travers la zone de capture et qui est situé à une distance fixe comprise entre 60-120 mm de l'axe longitudinal du capteur CMOS dans le module d'acquisition d'images (8, 16) du dispositif.
- le guide lumineux ou la bande de signalisation lumineuse (5) est situé(e) juste au-dessus du capteur de barrière optique (3), qui indique à l'utilisateur où placer le(s) doigt(s) dans l'air pour assurer une capture de doigt correcte, dans lequel ce guide lumineux comprend :
∘ une carte électronique avec un ensemble de DEL RVB dont la luminosité et la couleur peuvent être configurées par le biais de logiciel à partir du module de traitement du dispositif ;
∘ un élément diffuseur en plastique, constitué d'un matériau translucide, qui isole et protège les DEL de l'extérieur et permet à la lumière de passer à travers lui.

6. Dispositif biométrique pour la capture d'empreinte digitale sans contact selon l'une quelconque des revendications précédentes, dans lequel le module d'acquisition d'images (**8, 16**) comprend :
- un capteur d'image CMOS couleur (**16**) de taille 1/3"-1,25", avec une résolution minimale comprise entre 1~3 MP, technologie de détection d'obturateur globale et un taux d'acquisition de trame compris entre 30~64 fps, dans lequel le capteur CMOS est situé à une distance fixe comprise entre 60~120 mm du capteur de barrière optique (**3**) du dispositif,
- une lentille optique (14) avec une longueur focale fixe qui peut être dans la plage de 8~16 mm, située directement devant le capteur CMOS, et qui peut incorporer une ouverture de diaphragme de taille fixe (15) dont le nombre peut varier de F5.6-F11 pour réduire la quantité de lumière passant à travers la lentille,
- une fenêtre en verre transparent ultra-résistant (**7**) d'une épaisseur de 1~2 mm, qui protège et isole les éléments à la fois du module d'acquisition d'images et du module d'éclairage du dispositif, dans lequel cette fenêtre en verre peut être traitée avec un revêtement oléophobe sur sa face externe qui aide à minimiser l'effet des empreintes digitales latentes, et avec un revêtement antireflet sur sa face interne qui empêche les réflexions à la fois directes et indirectes de l'éclairage sur la surface en verre.

7. Dispositif biométrique pour la capture d'empreinte digitale sans contact selon l'une quelconque des revendications précédentes, dans lequel le module de contrôle peut comporter au moins un processeur miniaturisé, un module de mémoire pour le stockage sécurisé de données, plusieurs modules d'alimentation en puissance de tensions et de courants différents, des modules d'entrée et de sortie numériques configurables, des modules d'interface de communication pour l'envoi et/ou la réception de données vers/depuis le dispositif, ainsi qu'un ensemble de programmes logiciels et d'algorithmes de traitement pour réaliser la reconnaissance biométrique des empreintes digitales sans toucher qui ont été capturées avec le dispositif, ainsi que les opérations logiques d'un système de contrôle d'accès.

8. Procédé de capture et de traitement des empreintes digitales sans contact à l'aide du dispositif biométrique selon l'une quelconque des revendications 1 à 7, comprenant les étapes consistant à :
- détecter un objet ou un ou plusieurs doigts passant à travers un plan ou une zone capture prédéfini(e), en combinant des informations d'un capteur de barrière optique et d'un capteur de proximité ToF pour déterminer rapidement et précisément la position correcte du ou des doigts au sein de la zone de capture du dispositif, qui, à son tour, fournit un retour d'information instantané à l'utilisateur en positionnant correctement le(s) doigt(s) au sein de la zone de capture optimale par des indicateurs acoustiques et lumineux,
- initialiser le module d'acquisition d'images et activer le module d'éclairage, dans lequel le module d'éclairage projette un motif lumineux uniforme et intense sur l'objet d'intérêt et dans lequel la longueur d'onde peut être variée de manière dynamique pendant l'éclair de la lumière,
- activer le processus de capture dans le module d'acquisition d'images juste au moment où l'objet d'intérêt traverse le plan de capture optimal qui est délimité par le capteur de barrière optique ; le dispositif peut également incorporer une bande de signalisation lumineuse qui est située juste au-dessus du capteur de barrière optique pour indiquer à l'utilisateur l'endroit cible où positionner le(s) doigt(s) pour la capture,
- détecter la position de l'objet d'intérêt au sein des images acquises, dans lequel le traitement d'image numérique est réalisé pour déterminer tout d'abord la position du ou des doigts qui sont présents dans l'image, puis pour procéder à leur segmentation individuelle, suivie d'une étape de recherche et de recadrage de la zone d'intérêt des empreintes digitales, à savoir le bout du doigt, ainsi que le traitement numérique associé à ces empreintes digitales recadrées afin d'améliorer la qualité d'image et de simplifier la nature complexe des empreintes digitales sans contact,
- détecter la vivacité à l'aide d'un algorithme anti-imposture pour déterminer si une image d'empreinte digitale sans contact en entrée correspond ou non à celle d'un doigt authentique, dans lequel l'algorithme utilise des techniques d'intelligence artificielle basées sur des modèles mathématiques entraînés,
- détecter la qualité des empreintes digitales sans toucher capturées au moyen d'un algorithme qui détermine si une image d'empreinte digitale entrée remplit ou non une qualité prédéfinie pour lancer le processus d'inscription et/ou de reconnaissance biométrique du dispositif ; lorsque l'image d'empreinte digitale entrée ne remplit pas la qualité prédéfinie, le dispositif ne poursuivra pas le processus d'inscription d'empreinte digitale et/ou l'étape de reconnaissance biométrique, dans lequel cet algorithme de qualité d'empreinte digitale, ainsi que l'algorithme anti-imposture, peuvent devenir un filtre de sécurité supplémentaire pour le processus d'inscription et/ou de reconnaissance biométrique du dispositif, ce qui à son tour minimise le taux d'erreur dû aux accès non autorisés,
- extraire des caractéristiques de l'image d'empreinte digitale sans contact au moyen d'un algorithme biométrique avancé qui permet d'obtenir le motif biométrique d'une empreinte digitale entrée, dans lequel ce schéma biométrique est mis en correspondance avec d'autres motifs biométriques précédemment stockés dans la base de données pour réaliser le processus de reconnaissance biométrique d'utilisateur : identification 1:N et/ou vérification 1:1.

9. Procédé de reconnaissance d'empreinte digitale sans toucher pour un ou plusieurs doigts selon la revendication 8, **caractérisé par** la mise en œuvre de plusieurs stratégies d'identification biométrique selon le niveau de sécurité requis, au moins les stratégies suivantes étant établies :
- en cas de capture d'une seule empreinte digitale, le motif biométrique de cette empreinte digitale est extrait et une comparaison 1:N de ce motif avec tous les motifs d'empreinte digitale stockés dans la base de données est réalisée pour déterminer l'identité de l'utilisateur ; cette stratégie correspond au niveau de sécurité 1, à l'aide d'un justificatif d'identité d'accès unique, qui permet un maximum de jusqu'à N utilisateurs dans la base de données, typiquement 1 000 utilisateurs, tout en garantissant des taux de fausses acceptations (FAR) et des taux de faux rejets (FRR) acceptables, sans compromettre la sécurité et la facilité d'utilisation du système,
- en cas de capture de deux empreintes digitales, la valeur de qualité des deux empreintes digitales est déterminée, ainsi que le motif biométrique de chaque empreinte digitale, et une comparaison 1:N du motif d'empreinte digitale ayant la meilleure qualité d'image avec tous les motifs stockés dans la base de données est réalisée pour déterminer l'identité de l'utilisateur ; une fois que ces étapes sont terminées, un processus d'authentification supplémentaire de l'utilisateur identifié est réalisé, qui restitue une comparaison 1:1 du motif d'empreinte digitale restant (non utilisé précédemment dans le processus d'identification) avec le sous-ensemble de motifs d'empreinte digitale de l'utilisateur identifié qui sont stockés dans la base de données ; cette stratégie correspond au niveau de sécurité 2, car elle utilise un double justificatif d'identité d'accès, qui permet un maximum de jusqu'à 5*N utilisateurs dans la base de données, typiquement 5 000 utilisateurs, tout en garantissant des taux de fausses acceptations (FAR) et des taux de faux rejets (FRR) acceptables, sans compromettre la sécurité et la facilité d'utilisation du système,
- en cas de capture de trois empreintes digitales, la valeur de qualité des trois empreintes digitales est déterminée, ainsi que le motif biométrique de chaque empreinte digitale, et une comparaison 1:N du motif d'empreinte digitale ayant la meilleure qualité avec tous les motifs stockés dans la base de données est réalisée pour déterminer l'identité de l'utilisateur ; une fois que ces étapes sont terminées, un processus de double authentification supplémentaire de l'utilisateur identifié est réalisé, qui met en place une comparaison 1:1 des motifs d'empreinte digitale restants de moindre qualité qui n'ont pas été utilisés précédemment dans le processus d'identification, avec le sous-ensemble de motifs d'empreinte digitale de l'utilisateur identifié stockés dans la base de données ; cette stratégie correspond au niveau de sécurité 3, car elle utilise un triple justificatif d'identité d'accès, qui permet un maximum de jusqu'à 50*N utilisateurs dans la base de données, typiquement 50,000 utilisateurs, tout en garantissant des taux de fausses acceptations (FAR) et des taux de faux rejets (FRR) acceptables, sans compromettre la sécurité et la facilité d'utilisation du système.

10. Procédé d'apprentissage automatique pour l'inscription d'utilisateur qui permet une mise à jour adaptative et automatique des motifs d'empreinte digitale de référence des utilisateurs au fil du temps, dans lequel le procédé selon la revendication 8 est utilisé pour déterminer la qualité des images d'empreinte digitale sans toucher capturées avec le dispositif et dans lequel le procédé d'apprentissage automatique détermine la qualité des empreintes digitales sans toucher capturées pendant un fonctionnement normal ainsi que le score de similarité entre elles, en comparant les valeurs estimées à celles des motifs de référence stockés dans la base de données pour un utilisateur donné, des règles de décision cohérentes peuvent être établies pour remplacer, dans certaines circonstances, le motif de référence existant par un motif mis à jour qui reflète un changement manifeste et persistant dans l'état des empreintes digitales d'un utilisateur au fil du temps.
